# EUROPÄISCHE PATENTSCHRIFT

(11) **EP 0 283 670 B1**
(45) Veröffentlichungstag und Bekanntmachung des Hinweises auf die Patenterteilung: **07.04.1993**
(21) Anmeldenummer: 88101213.2
(22) Anmeldetag: 28.01.1988
(51) Int. Cl.: B65B 21/06, B65G 47/08

(54) **Gruppiereinrichtung zur Bildung von Behältergruppen**
Grouping device for making container groups
Dispositif de groupement pour la formation de groupes de récipients

(30) Priorität: 31.01.1987 DE 3702954
(43) Veröffentlichungstag der Anmeldung: 28.09.1988
(73) Patentinhaber: KHS Maschinen- und Anlagenbau Aktiengesellschaft, D-47057 Duisburg (DE)
(72) Erfinder: Münch, Karl, D-6148 Heppenheim Bergstrasse (DE)

(56) Entgegenhaltungen:
- DE-A- 3 151 997
- GB-A- 1 014 767

## Beschreibung

Die Erfindung bezieht sich auf eine Gruppiereinrichtung zur Bildung von jeweils eine vorgegebene Gruppenlänge aufweisenden Behältergruppen durch Abtrennen einer der Gruppenlänge entsprechenden Anzahl von Behältern aus einem über wenigstens einen Förderer zugeführten Behälterstrom gemäß Oberbegriff Patentanspruch 1.

Gruppiereinrichtungen dieser Art sind an sich bekannt und dienen generell dazu, um aus einem in der Regel mehrspurigen bzw. mehrreihigen, der Gruppiereinrichtung kolonnenartig zugeführten Behälterstrom jeweils Behältergruppen, die in Förderrichtung des Förderers eine vorgegebene Gruppenlänge, d.h. eine dieser Gruppenlänge entsprechende Anzahl von Behältern, sowie quer zur Förderrichtung eine der Anzahl der zugeführten Behälterreihen entsprechende Anzahl von Behältern aufweisend, abzutrennen und als Behältergruppe einem sich an die Gruppiereinrichtung anschließenden Teil einer Gesamtanlage, beispielsweise einem Einpacker zuzuführen.

Das Abtrennen der Behältergruppen von dem kolonnenartig zugeführten Behälterstrom erfolgt grundsätzlich durch Anschlag-bzw. Stauflächen, die an Gruppierfingern mehrerer Gruppierelemente gebildet sind und auf einer geschlossenen Umlaufbahn derart bewegt werden, daß diese Anschlag- bzw. Stauflächen auf einer Teillänge der Umlaufbahn in die Bewegungsbahn der auf dem Förderer aufrechtstehenden Behälter hineinreichen und sich auf dieser Teillänge der Umlaufbahn in Richtung der Förderrichtung des Förderers bewegen, allerdings mit einer Geschwindigkeit, die kleiner ist als die Fördergeschwindigkeit des Förderers. Die Gruppierfinger sind im einfachsten Fall an einem von einer geschlossenen und endlos umlaufenden Kette gebildeten Antriebselement vorgesehen. Nach dem Inbetriebsetzen der die Gruppiereinrichtung aufweisenden Gesamtanlage kommen bei einem mehrspurigen oder mehrreihigen Behälterstrom die in Förderrichtung dieses Förderers ersten Behälter zur Anlage mit jeweils wenigstens einer Anschlag- bzw. Staufläche eines ersten Gruppierelementes, so daß die Bewegung des Behälterstromes in Richtung "Einlauf - Auslauf" der Gruppiereinrichtung durch dieses sich langsamer als die Fördergeschwindigkeit des Fördereres bewegendes Gruppierelement zunächst abgebremst wird. Sobald eine der angestrebten Gruppenlänge entsprechende mehrreihige Behältergruppe des Behälterstroms den Einlauf der Gruppiereinrichtung passiert hat, wird zwischen die letzten Behälter dieser Behältergruppe und die nachfolgenden Behälter jeweils wenigstens eine Anschlag- bzw. Staufläche eines nachfolgenden zweiten Gruppierelementes hineinbewegt. Gleichzeitig oder kurz danach bewegt sich das erste bzw. vorauseilende Gruppierelement mit seinen Anschlag- bzw. Stauflächen aus der Bewegungsbahn der Behälter heraus und gibt damit die Behälter der Behältergruppe frei, die dann als solche von dem Förderer beschleunigt abgeführt und dadurch von den nachfolgenden Behältern abgetrennt wird. Letztere werden von dem nachfolgenden Gruppierelement solange zurückgehalten bzw. abgebremst, bis wieder eine der Gruppenlänge einer Behältergruppe entsprechende Anzahl von Behältern den Einlauf der Gruppiereinrichtung passiert hat und ein weiteres, nachfolgendes Gruppierelement sich mit seinen Anschlag- bzw. Stauflächen in die Bewegungsbahn der Behälter hinter dieser Behältergruppe hineinbewegt hat.

Der für eine einwandfreie Arbeitsweise der Gruppiereinrichtung notwendige Abstand (Zwickelmaß), den die Anschlag- bzw. Stauflächen zweier aufeinander folgender Gruppierelemente voneinander aufweisen, ist durch die angestrebte Gruppenlänge, im wesentlichen aber auch durch die Abmessungen, die die Behälter in Förderrichtung des Förderers aufweisen, d.h. den Durchmesser der Behälter bestimmt. Sollen mit einer Anlage Behälter mit unterschiedlichem Durchmesser verarbeitet werden, so ist eine Anpassung des Zwickelmaßes unerläßlich. Letzteres ist zwar auch bei bekannten Gruppiereinrichtungen möglich, allerdings nur mit einem relativ großen konstruktiven und/oder arbeitstechnischen Aufwand.

Der Erfindung liegt die Aufgabe zugrunde, eine Gruppiereinrichtung aufzuzeigen, mit der eine Einstellung bzw. Anpassung des Zwickelmaßes an unterschiedliche Behältergrößen einfach und problemlos möglich ist.

Zur Lösung dieser Aufgabe ist eine Gruppiereinrichtung entsprechend dem kennzeichnenden Teil des Patentanspruches 1 ausgebildet.

Da bei der erfindungsgemäßen Gruppiereinrichtung die Gruppierlemente und damit die Anschlag- oder Stauflächen bzw. die diese bildenden Gruppierfinger jeweils schwenkbar an dem vorzugsweise von einer endlosen Kette gebildeten Antriebselement gehalten sind und jedes Gruppierelement über den Lenkarm an einem Angriffspunkt des vorzugsweise ebenfalls von einer Kette gebildeten Verstellelementes angreift, wobei an einem Ende der Teillänge der Umlaufbahn, an der (Teillänge) die Anschlag- bzw. Stauflächen jeweils in die Bewegungsbahn der Behälter auf den Förderer hineinreichen, die Schwenkachse des jeweiligen Gruppierelementes dem zugehörigen Angriffspunkt voreilt und an dem anderen Ende dieser Teillänge diese Schwenkachse dem zugehörigen Angriffspunkt nacheilt, weisen die Gruppierfinger an den beiden Enden der genannten Teillänge der Umlaufbahn nicht nur jeweils eine Neigung gegenüber einer senkrecht zur Förderrichtung des Förderers verlaufenden Achsrichtung, und zwar in entgegengesetzter Richtung auf, sondern es ist durch Änderung der Lage des Verstellelementes relativ zu dem Antriebselement und damit durch Änderung des Abstandes zwischen der jeweiligen Schwenkachse und dem zugehörigen Angriffspunkt auch möglich, den Winkel dieser Neigung zu verändern und damit das Zwickelmaß einzustellen und an die Größe der verwendeten bzw. verarbeiteten Behälter anzupassen, und zwar ohne ein konstruktives Umrüsten der Gruppiereinrichtung.

Weiterbildungen der Erfindung sind Gegenstand der Unteransprüche.

Die Erfindung wird im folgenden anhand der Figuren an Ausführungsbeispielen näher erläutert. Es zeigen:
- Fig. 1: in Seitenansicht und teilweise aufgebrochen einen aus einer Gruppiervorrichtung gemäß einer ersten möglichen Ausführungsform der Erfindung sowie aus einem sich hieran anschließenden Einpacker bestehenden Teil einer Flaschenbehandlungsanlage;
- Fig. 2: eine Draufsicht auf den in der Figur 1 dargestellten Teil der Flaschenbehandlungsanlage;
- Fig. 3: in vergrößerter Detaildarstellung eine Seitenansicht der Gruppiereinrichtung gemäß der ersten Ausführungsform der Erfindung;
- Fig. 4: eine Queransicht der Gruppiereinrichtung nach Fig. 3;
- Fig. 5: in vergrößerter Teildarstellung zwei das Antriebselement bzw. das Verstellelement bildende Ketten der Gruppiereinrichtung nach Fig. 3 zusammen mit einem der an der einen Kette schwenkbar gehaltenen Balken sowie zusammen mit dem mit dem Balken verbundenen und an der anderen Kette angreifenden Lenkarm;
- Fig. 6: einen Schnitt entsprechend der Linie I - I der Figur 5;
- Fig. 7: in Detaildarstellung und Draufsicht eine zweite, mögliche Ausführungsform der Gruppiervorrichtung gemäß der Erfindung;
- Fig. 8: einen Schnitt entsprechend der Linie II-II der Fig. 7;
- Fig. 9: einen Schnitt entsprechend der Linie III-III der Fig. 7.

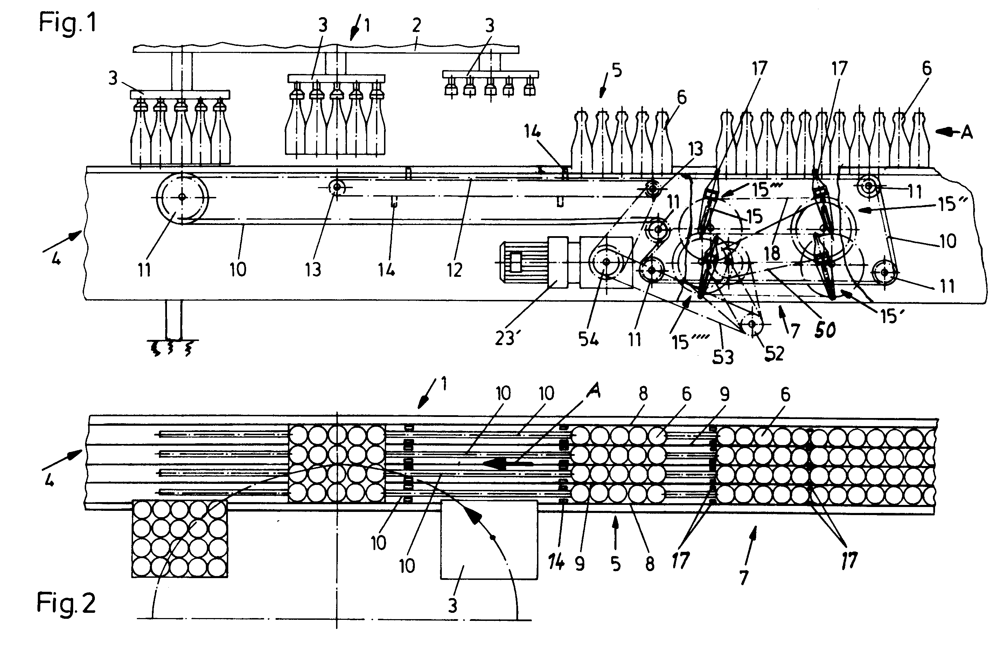

In den Figuren ist 1 ein Einpacker üblicher Ausbildung, der an einem um eine vertikale Achse drehbaren Rotor 2 mehrere, jeweils in vertikaler Richtung auf- und abbewegbare sowie um die vertikale Achse drehbare Packköpfe aufweist, die jeweils eine auf einem Transporteur 4 angeförderte Flaschengruppe, 5 welche bei der dargestellten Ausführungsform aus insgesamt zwanzig Flaschen 6 besteht und in welcher die Flaschen 6 in vier Reihen zu je fünf Flaschen 6 angeordnet sind, vom Transporteur 4 abnehmen und in nicht dargestellte Transportverpackungen (Flaschenkästen) einsetzen. Die Flaschen 6 werden bei der für die Figuren 1 und 2 gewählten Darstellung über den Transporteur 4 oder eine weitere, vorgeschaltete Fördereinrichtung aufrechtstehend und in einem dichtgepackten vierreihigen bzw. -spurigen Flaschenstrom von rechts zugeführt (Pfeil A).

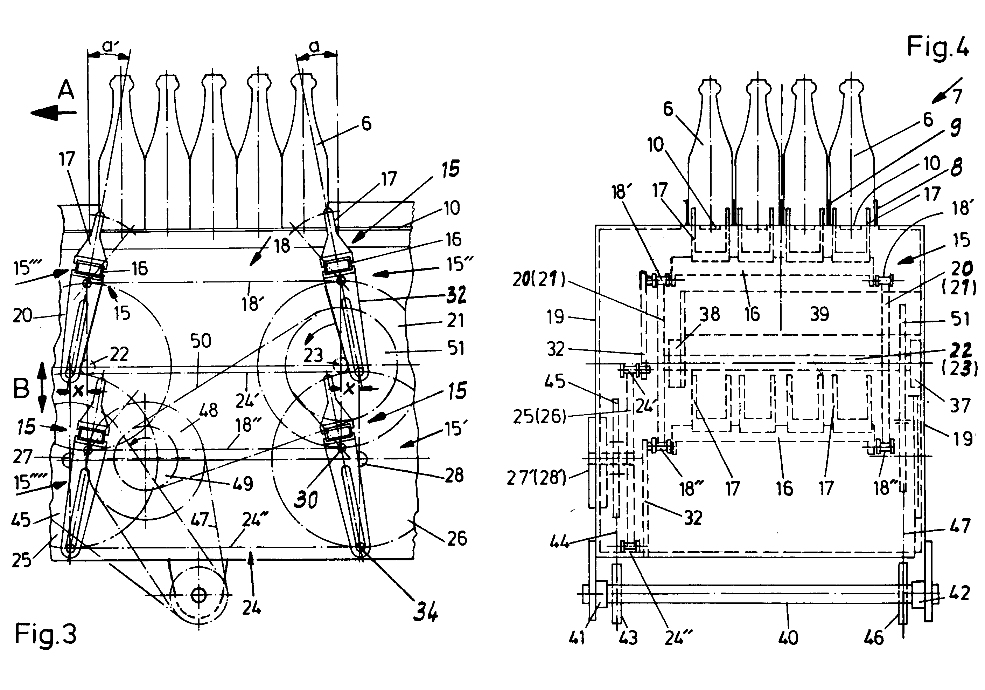

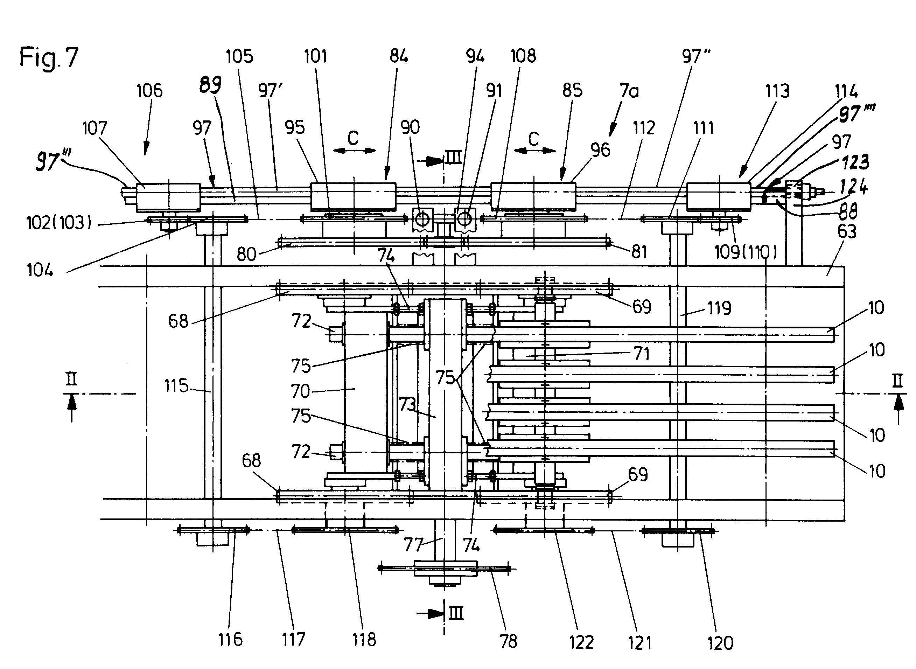

In den Figuren 1 und 2 ist dem Einpacker 1 eine Gruppiereinrichtung 7 vorgeschaltet, die in den Figuren 3 - 5 näher dargestellt ist. Anstelle der Gruppiereinrichtung 7 kann aber auch die in den Figuren 7 - 9 dargestellte Gruppiereinrichtung 7a verwendet werden, die sich zwar in konstruktiver Hinsicht von der Gruppiereinrichtung 7 unterscheidet, in ihrer generellen Funktionsweise (Bildung der Flaschengruppen 5 sowie Möglichkeit einer Anpassung des Zwickelmaßes an Behälter bzw. Flaschen 6 mit unterschiedlichem Durchmesser) der Gruppiereinrichtung 7 entspricht. Die nachfolgenden Ausführungen, die sich auf das Zusammenwirken der Gruppiereinrichtung 7 mit dem nachgeschalteten Einpacker 1 beziehen, gelten somit in gleicher Weise auch für die Gruppiereinrichtung 7a.

Im Bereich der dem Einpacker 1 vorgeschalteten Gruppiereinrichtung 7 wird der Flaschenstrom in die Flaschengruppen 5 aufgeteilt, die dann jeweils als solche getrennt nacheinander dem Einpacker 1 zugeführt werden. Zum Fördern der Flaschen 6 bzw. der Flaschengruppen 5 im Bereich der Gruppiereinrichtung 7 sowie von dieser an den Einpacker 1 sind vier parallel zueinander angeordnete und jeweils durch seitliche, beispielsweise von Führungsblechen gebildete Führungen 8 bzw. 9 nach außen begrenzte bzw. voneinander getrennte Transportbahnen vorgesehen, von denen jede ein endlos umlaufendes Transportelement, in Form einer Scharnierbandkette 10 aufweist. Jede Scharnierbandkette 10 ist über mehrere Umlenkrolle oder -räder 11, von denen eines durch einen Antrieb angetrieben ist, derart geführt, daß jede Scharnierbandkette 10 mit ihrer jeweiligen oberen Länge in horizontaler Richtung und in Förderrichtung A verläuft und eine Standfläche für den Boden der aufrechtstehenden Flaschen 6 bildet.

Um insbesondere die Bewegung der Flaschengruppen 5 von der Gruppiereinrichtung 7 an den Einpacker 1 an dessen Arbeitszyklus anzupassen, sind im Bereich zwischen der Gruppiereinrichtung 7 und dem Einpacker 1 zusätzlich zu den von den Scharnierbandketten 10 gebildeten Fördereinrichtungen mehrere endlos umlaufende, parallel zueinander angeordnete Hilfsketten 12 vorgesehen, von denen jede über zwei Kettenräder 13 derart geführt ist, daß sie mit ihrer oberen Länge parallel zu den oberen Längen der Scharnierbandketten 10 liegt. Die Anordnung ist dabei so getroffen, daß an beiden Längsseiten der oberen Länge jeder Scharnierbandkette 10 die etwas tiefer liegende obere Länge jeweils einer Hilfskette 12 vorgesehen ist. Jede Hilfskette 12 ist in vorgegebenen Abständen mit Anlagenocken 14 versehen, die an der jeweils oberen Länge der Hilfskette 12 von unten her durch einen zwischen der zugehörigen Scharnierbandkette 10 und der seitlichen Führung 8 bzw. 9 gebildeten Spalt über die von der oberen Länge der betreffenden Scharnierbandkette 10 gebildete Standfläche für die Flaschen 6 vorsteht. Die Anlagenocken 14 bilden somit Anlageflächen für die in Förderrichtung A vorderen Flaschen 6 der jeweiligen Flaschengruppe 5. Da die Hilfsketten 12 über das jeweilige, in der Figur 1 rechte Kettenrad 13 derart angetrieben werden, daß deren obere Längen sich in Förderrichtung A bewegen, die Geschwindigkeit der Hilfsketten 12 jedoch kleiner ist als die Geschwindigkeit der Scharnierbandketten 10 laufen die in Förderrichtung vorderen Flaschen 6 jeder Flaschengruppe 5 (nach dem Abtrennen dieser Flaschengruppe in der Gruppiereinrichtung 7) gegen die Anlagenocken 14 an. Die betreffende Flaschengruppe 5 wird dann unter Aufrechterhaltung ihrer Formation mit einer verminderten Geschwindigkeit, die der Umlaufgeschwindigkeit der Hilfsketten 12 entspricht, an den Einpacker 1 transportiert. Der Antrieb der Hilfsketten 12 ist dabei derart an den Arbeitstakt der Gruppiereinrichtung 7 angepaßt, daß immer dann, wenn eine Flaschengruppe 5 die Gruppiereinrichtung 7 verläßt, sich in Förderrichtung vor dieser Flaschengruppe Anlagenocken 14 befinden, gegen die dann diese Flaschengruppe 5 vor dem Erreichen des Einpackers 1, aber erst nach einer für das Abtrennen von nachfolgenden Flaschen 6 bzw. Flaschengruppen 5 ausreichenden Förderweglänge zur Anlage kommt.

Die im Detail in den Figuren 3 - 6 dargestellte Gruppiereinrichtung 7 weist vier Grupierelemente 15 auf. Jedes Gruppierelement 15 ist von einem Balken 16 gebildet, der mit seiner Längserstreckung in horizontaler Richtung und senkrecht zur Förderrichtung A liegt und an einer Längsseite, d.h. bei der dargestellten Ausführungsform an seiner oberen Längsseite eine Vielzahl von über diese Längsseite vorstehenden Gruppierfingern 17 trägt, die jeweils hinsichtlich ihrer Ausbildung und Anordnung identisch sind und von denen jeweils zwei von Schenkeln eines U-förmigen Elements gebildet sind. Die Verteilung der Gruppierfinger 17 am Balken 16 ist derart, daß jeder Gruppierfinger 17 von unten her durch den zwischen der Längsseite einer Scharnierbandkette 10 und der benachbarten Führung 8 bzw. 9 gebildeten Spalt hindurch über die Oberseite der oberen Länge der betreffenden Scharnierbandkette 10 vorstehen kann und somit eine in der Bewegungsbahn der Flaschen 6 liegende Anschlagfläche bildet, wobei dann an beiden Seiten der oberen Länge jeder Scharnierbandkette 10 zwei derartige Anschlagflächen vorgesehen sind, wie sich dies insbesondere aus der Figure 4 ergibt. Durch eine entsprechende Getriebeeinrichtung werden die Gruppierelemente 15 auf einer in sich geschlossenen Bahn derart bewegt, daß jedes Gruppierelement 15 am Einlauf der Gruppiereinrichtung aus einer abgesenkten Ausgangsposition, die in den Figuren mit 15ʹ bezeichnet ist, zunächst in eine mit 15ʺ bezeichnete angehobene Position bewegt wird, wobei sich die in der Position 15ʹ weit unterhalb der oberen Länge der Scharnierbandketten 10 befindlichen Gruppierfinger 17 bei Erreichen der Position 15ʺ mit ihren freien Enden über die oberen Längen der Scharnierbandketten 10 vorstehen und somit als Anschlagflächen wirksam sind. Anschließend wird jedes Gruppierelement 15 bei weiterhin über die Oberseite der oberen Längen der Scharnierbandketten 10 vorstehenden Gruppierfingern 17 in horizontaler Richtung und in Förderrichtung A bewegt, bis das betreffende Gruppierelement 15 am Auslauf der Gruppiereinrichtung 7 die Position 15‴ erreicht hat. Daran anschließend wird jedes Gruppierelement 15 wieder abgesenkt, womit die Gruppierfinger 17 aus der Bewegungsbahn der Flaschen 6 herausbewegt werden. Sobald das betreffende Gruppierelement 15 die in den Figuren mit 15ʺʺ unterste Position erreicht hat, in welcher die Gruppierfinger 17 wieder mit Abstand unterhalb der oberen Länge der Scharnierbandketten angeordnet sind, bewegt sich das betreffende Gruppierelement in horizontaler Richtung und entgegen der Förderrichtung A in die Ausgangsposition 15ʹ zurück.

Die Anzahl der Gruppierelemente 15 ist bezogen auf die gesamte Länge der beschriebenen Bewegungsbahn so gewählt, daß sich zu jedem Zeitpunkt wenigstens ein Gruppierelement 15 zwischen den Positionen 15ʹ und 15‴ befindet und immer dann, wenn ein Gruppierelement 15 die Position 15‴ erreicht hat, ein nachfolgendes Gruppierelement 15 die Position 15ʺ eingenommen hat. Weiterhin ist die Geschwindigkeit, mit der die Gruppierelemente 15 in der beschriebenen Weise umlaufen bzw. sich von der Position 15ʺ an die Position 15‴ in Förderrichtung A bewegen, kleiner als die Fördergeschwindigkeit der Scharnierbandketten 10. Hierdurch wird erreicht, daß durch jedes Gruppierelement 15 bzw. durch dessen Gruppierfinger 17 nach dem Verlassen der Position 15ʺ die nachfolgenden, unmittelbar gegeneinander anliegenden bzw. anstehenden Flaschen 6 der Flaschenreihen gegen die größere Fördergeschwindigkeit der Scharnierbandketten 10 zurückgehalten werden und entsprechend der geringeren Geschwindigkeit des betreffenden Gruppierelementes 15 verlangsamt in Richtung vom Einlauf auf den Auslauf der Gruppiereinrichtung 7 bewegt werden.

Sobald ein die Flaschen 6 zurückhaltendes Gruppierelement 15 die Position 15‴ bzw. den Auslauf der Gruppiereinrichtung 7 erreicht und sich somit zwischen dem Einlauf und dem Auslauf der Gruppiereinrichtung 7 in jeder Reihe des Feaschenstromes eine der abzutrennenden Flaschengruppe 5 entsprechende Anzahl von Flaschen 6 befindet, auf jeden Fall bevor dieses Gruppierelement 15 die Position 15‴ verläßt und mit seinen Gruppierfingern 17 die zurückgehaltenen Flaschen 6 freigibt, haben sich die Gruppierfinger 17 eines nachfolgenden Gruppierelementes 15 an der Position 15ʺ, d.h. an Einlauf der Gruppiereinrichtung 7 zwischen die letzten Flaschen 6 der abzutrennenden Flaschengruppe 5 und die nachfolgenden Flaschen 6 hineinbewegt, und zwar jeweils beidseiting von den Bereich, an dem diese Flaschen 6 dort noch gegeneinander anliegen. Anschließend werden durch das Abtauchen des vorausgehenden, die Position 15‴ verlassenden Gruppierelementes 15 die die abzutrennende Flaschengruppe 5 bildenden Flaschen 6 freigegeben und als Flaschengruppe 5 durch die Scharnierbandketten 10 mit größerer Geschwindigkeit weggefördert. Die dieser Flaschengruppe 5 nachfolgenden Flaschen 6 liegen dann gegen die Gruppierfinger 17 des nachfolgenden, sich nun von der Position 15ʺ an die Position 15‴ bewegenden Gruppierelementes 15 an, werden mit diesem verlangsamt an den Auslauf bewegt und dort freigegeben, nachdem ein weiteres nachfolgendes Gruppierelement 15 die Position 15ʺ erreicht hat. Der am Einlauf der Gruppiereinrichtung 7 anstehende dichtgepackte Flaschenstrom wird somit in einzelne Gruppen 5 aufgeteilt. Für eine einwandfreie Funktion der Gruppiereinrichtung 7 ist es notwendig, daß der wirksame Abstand (Zwickelmaß), den die Gruppierfinger 17 zweier in den Positionen 15ʺ bzw. 15ʺʹ befindlicher Gruppierelemente 15 in Förderrichtung A voneinander aufweisen, etwas kleiner ist als die Summe der Durchmesser der in jeder Reihe der Gruppen 5 angeordneten Flaschen 6, d.h. bei der dargestellten Ausführungsform etwas kleiner ist als der fünffache Durchmesser der Flaschen 6.

Sollen nun mit ein und derselben Anlage Flaschen 6 mit unterschiedlichem Durchmesser verarbeitet werden, so ist vor allem auch eine Einstellung bzw. Anpassung dieses Zwickelmaßes notwendig. Diese Einstellung ist mit der Gruppiereinrichtung 7 in besonders einfacher Weise möglich. Für die Bewegung der Gruppierelemente 15 und die angesprochene Einstellung sind zunächst zwei jeweils von einer in sich geschlossenen und endlos umlaufenden Kette 18 gebildete Antriebselemente für die Gruppierelemente 15 vorgesehen, wobei jede Kette 18 an einer Längsseite der Gruppiereinrichtung 7 bzw. des von dieser gebildeten Teils des Transporteurs 4 im Inneren eines geschlossenen Gehaüses 19 vorgesehen und jeweils über zwei Kettenräder 20 und 21 derart geführt ist, daß sie eine obere, horizontale und sich in Förderrichtung A bewegende Länge 18ʹ sowie eine untere, ebenfalls horizontale und sich entgegen der Förderrichtung A bewegende Länge 18ʺ aufweist, wobei beide Längen unterhalb einer horizontalen, von den oberen Längen der Scharnierbandketten 10 gebildeten Ebene liegen. Die Kettenräder 20 der beiden Ketten 18 sind an einer gemeinsamen, im Gehäuse 19 drehbar gelagerten und mit ihrer Achse senkrecht zur Förderrichtung A liegenden Welle 22 und die Kettenräder 21 der beiden Ketten 18 an einer gemeinsamen, ebenfalls im Gehäuse 19 drehbar gelagerten und mit ihrer Achse senkrecht zur Förderrichtung A liegenden Welle 23 befestigt, wobei die Welle 23 durch einen Kettentrieb von einem Getriebemotor 23ʹ angetrieben wird, der bei der dargestellten Ausführungsform über einen entsprechenden Kettentrieb auch zum Antrieb der in der Figur 1 rechten Kettenräder 13 der Hilfsketten 12 dient.

Innerhalb des Gehäuses 19 ist an einer Längsseite der Gruppiereinrichtung 7 bzw. des von dieser gebildeten Teils des Transporteurs 4 ein ebenfalls von einer in sich geschlossenen und endlos umlaufenden Kette 24 gebildetes Steuer- oder Verstellelement vorgesehen. Die Kette 24, die sich bei der für die Figur 4 gewählten Darstellung an der dortigen linken Seite der Gruppiereinrichtung 7 befindet, ist über zwei Kettenräder 25 und 26 derart geführt, daß sie eine obere horizontale und sich in Förderrichtung A bewegende Länge 24ʹ und eine untere, horizontale sich entgegen der Förderrichtung A bewegende Länge 24ʺ aufweist, wobei insbesondere die obere Länge 24ʹ parallel zu der oberen Länge 18ʹ der benachbarten Kette 18 liegt. Das Kettenrad 25 der Kette 24 ist an dem einen Ende, d.h. bei der für die Figur 4 gewählten Darstellung an dem rechten Ende eines horizontalen und mit seiner Achse senkrecht zur Förderrichtung A liegenden Lagerzapfens 27 befestigt, der mit seinem anderen Ende drehbar in einem gehäuseseitigen Lager 27ʹ gelagert ist. Das Kettenrad 26 der Kette 24 ist an dem einen Ende, d.h. bei der für die Figur 4 gewählten Darstellung an dem rechten Ende eines horizontalen, ebenfalls mit seiner Achse senkrecht zur Förderrichtung A liegenden Lagerzapfens 28 befestigt, der mit seinem anderen Ende drehbar in einem gehäuseseitigen Lager 28ʹ gelagert ist. Beide Lager 27ʹ und 28ʹ sind senkrecht zu den Achsen der Lagerzapfen 27 und 28 in vertikaler Richtung entsprechend dem Doppelpfeil B der Figur 3 verstellbar. Diese Verstellung kann auf verschiedenste Weise realisiert sein, beispielsweise durch eine entsprechende Spindelverstellung oder in noch einfacher Weise durch eine Klemmlager-Verstellung.

Wie insbesondere die Figur 3 zeigt, sind die beiden Ketten 18 und 24 bzw. die zugehörigen Kettenräder 20, 21 bzw. 25 und 26 an der einen Längsseite der Gruppiereinrichtung 7 derart angeordnet, daß sich die von den Ketten 18 und 24 gebildeten Schlaufen in Blickrichtung auf diese Längsseite teilweise überdecken, und zwar derart, daß bei der dargestellten Ausführungsform in jeder durch die Einstellung der Lager 27ʹ und 28ʹ möglichen Lage der Lagerzapfen 27 und 28 die obere Länge 24ʹ der Kette 24 tiefer liegt als die obere Länge 18ʹ der benachbarten Kette 18. Weiterhin ist die Anordnung so getroffen, daß die Kette 24 bzw. die von dieser gebildete vertikale Ebene in Blickrichtung auf die die Kette 24 aufweisende Seite der Gruppiereinrichtung 7 vor der Kette 18 bzw. vor der von der Kette 18 gebildeten vertikalen Ebene liegt. Die beiden Ketten 18 besitzen jeweils die gleiche Länge und sind demnach auch hinsichtlich ihrer Kettenräder 20 und 21 identisch ausgebildet. Die Kette 24 hat eine größere Länge als die Ketten 18 d.h. der Umfang der von der Kette 24 gebildeten Schlaufe ist größer als der Umfang der jeweils von den Ketten 18, gebildeten Schlaufe. Aus diesem Grunde ist auch der Durchmesser D der jeweils gleich großen Kettenräder 25 und 26 etwas größer als der Durchmesser d der ebenfalls jeweils gleich großen Kettenräder 20 und 21, d.h. bei der dargestellten Ausführungsform beträgt das Verhältnis des größeren Durchmessers D der Kettenräder 25 und 26 zu dem etwas kleineren Durchmesser d der Kettenräder 20 und 21 etwa 30/28, wobei weiterhin auch die obere bzw. untere Länge 24ʹ bzw. 24ʺ der Kette 24 etwas größer ist als die obere bzw. untere Länge 18ʹ bzw. 18ʺ der Ketten 18. Um letzteres zu erreichen, sind die unterhalb der Wellen 22 und 23 angeordneten Lagerzapfen 27 und 28 jeweils gegenüber der unmittelbar benachbarten Welle 22 bzw. 23 jeweils um einen Betrag x in Förderrichtung A bzw. entgegen dieser Förderrichtung A versetzt. Bei der dargestellten Ausführungsform beträgt das Verhältnis der oberen Längen 24ʹ und 18ʹ bzw. der unteren Längen 24ʺ und 18ʺ, d.h. damit auch das Verhältnis des Abstandes zwischen den Lagerzapfen 27 und 28 und des Abstandes zwischen den Wellen 22 und 23 etwa 381/355,6. Die Kette 24 ist über einen an dem Lagerzapfen 27 angreifenden Kennentrieb durch den Getriebemotor 23ʹ so angetrieben, daß sich nicht nur die obere Länge 24ʹ gleichsinnig mit den oberen Längen 18ʹ und die untere Länge 24ʺ gleichsinnig, d.h. in gleicher Richtung mit den unteren Längen 18ʺ bewegen, sondern auch die Umlaufgeschwindigkeiten der Kette 24 gleich der Umlaufgeschwindigkeit der Ketten 18 ist, d.h. ein betrachtetes Kettenglied der Kette 24 in der gleichen Zeit einen vollen Umlauf durchführt, in der auch ein betrachtetes Kettenglied an einer der Ketten 18 einen vollen Umlauf ausführt, wobei allerdings (wegen der größeren Länge der Kette 24) die tatsächliche Geschwindigkeit (Weggeschwindigkeit), d.h. die in einer bestimmten Zeitdauer zurückgelegte Wegstrecke insbesondere auch an der oberen und unteren Länge 24ʹ und 24ʺ der Kette 24 größer ist als an den oberen und unteren Längen 18ʹ und 18ʺ der Kette 18. Letzteres ist für die Funktion der Gruppiereinrichtung 7 wesentlich.

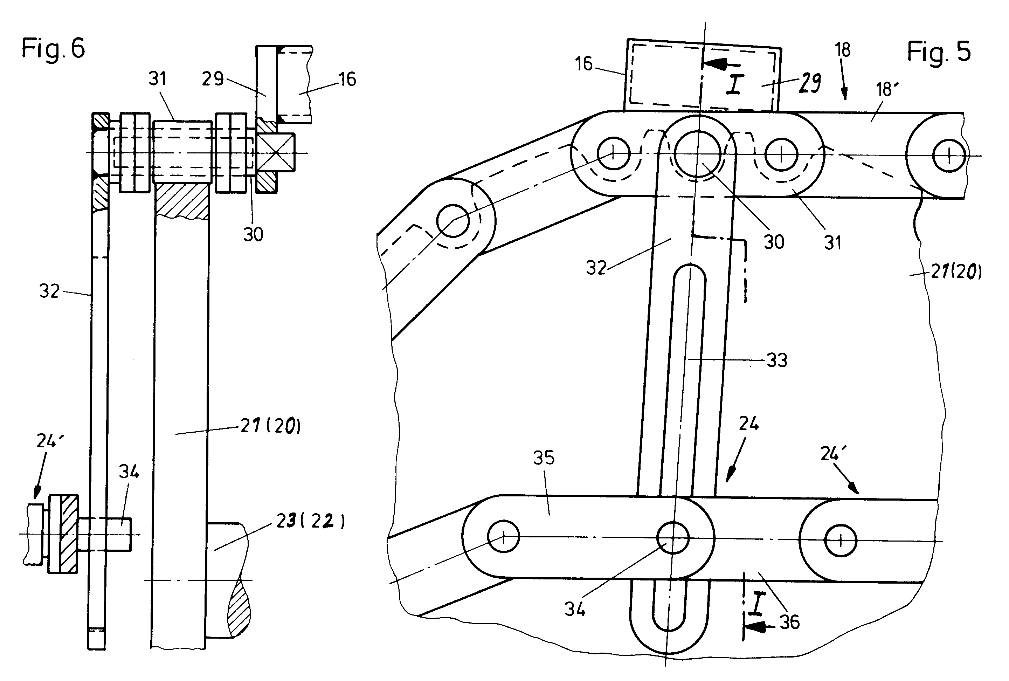

Zwischen den beiden Ketten 18 sind die Balken 16 der vier Gruppierelemente 15 jeweils beidendig schwenkbar gehalten, und zwar derart, daß diese Balken 16 mit ihrer Achse parallel zu der Achse der Wellen 22 bzw. 23 liegen. Wie die Figuren 5 und 6 zeigen, ist jeder Balken 16 an beiden Enden mit jeweils einem über die Unterseite dieses Balkens vorstehenden Hilfsarm 29 versehen, der mit seiner Längserstreckung senkrecht zur Längserstreckung des Balkens 16 liegt und an seinem freien, über die Unterseite des Balkens 16 vorstehenden Ende mit dem einen Ende eines Gelenkbolzens 30 drehfest verbunden ist, dessen Achse parallel zu der Längserstreckung des Balkens 16 liegt. Die beiden achsgleich miteinander angeordneten Gelenkbolzen 30 jedes Gruppierelementes 15 sind jeweils in einem an Kettengliedern 31 der Ketten 18 vorgesehenen Lager dreh- bzw. schwenkbar gelagert. An einer Seite jedes Balkens 16 steht der dortige Lagerbolzen mit seinem anderen Ende über die dem Balken 16 abgewandte Seite des Kettengliedes 31 vor und ist dort mit dem einen Endes eines als langgestreckter Hebel ausgebildeten Lenkarmes 32 verbunden, der mit seiner Längserstreckung senkrecht zur Achse des Gelenkbolzens 30 und parallel zur Längserstreckung des Hilfsarmes 29 liegt und außerdem mit seinem freien, dem Gelenkbolzen 30 entfernt liegenden Ende wesentlich weiter über die Unterseite des Balkens 16 vorsteht als der Hilfsarm 29. Der Lenkarm 32 ist mit einem als Führung dienenden und von dem freien Ende des Lenkarmes 32 ausgehenden Längsschlitz 33 versehen, der bis in die Nähe des Gelenkbolzens 30 reilht. In den Längsschlitz 33 greift ein Zapfen 34 hinein, der von einer überstehenden Länge eines zwei Kettenglieder 35 und 36 der Kette 24 verbindenden Gelenkbolzens gebildet ist.

Es versteht sich, daß die die Lager für die Gelenkbolzen 30 bildenden Kettenglieder 31 sowei die Zapfen 34 an den Ketten 18 und 24 jeweils in gleichmäßigen, der Anzahl der Gruppierelemente 15 entsprechenden Abständen vorgesehen sind, wobei die Ketten 18 und 24 über die zugehörigen Kettenräder 20 und 21 bzw. 25 und 26 derart geführt sind, daß bei jedem in der Position 15ʺ befindlichem Gruppierelement 15 die beiden Gelenkbolzen 30 und der Zapfen 34 sich jeweils am Anfang der oberen Länge 18ʹ bzw. 24ʹ und bei jedem in der Position 15ʺʹ befindlichem Gruppierelement 15 sich die beiden Gelenkbolzen 30 und der Zapfen 34 am Ende der oberen Länge 18ʹ bzw. 24ʹ befinden, wobei entsprechend dem im Vergleich zu dem Abstand der Wellen 22 und 23 größeren Abstand der Lagerzapfen 27 und 28 der Zapfen 34 in der Position 15ʺ den beiden Gelenkbolzen 30 bzw. der von diesen gebildeten Schwenkachse nacheilt und in der Position 15‴ (wegen der größeren Weggeschwindigkeit der Kette 24) die Gelenkbolzen 30 dem Zapfen 34 nacheilen. Hierdurch ist jedes Gruppierelement 15 beim Erreichen der Position 15ʺ um die von den Gelenkbolzen gebildete Schwenkachse derart geschwenkt, daß nicht nur der Lenkarm 32, sondern auch die Gruppierfinger 17 mit ihrer Längserstreckung mit der Vertikalen jeweils einen Winkel a einschließen, und zwar die Gruppierfinger 17 in der Form, daß sie in Förderrichtung A geneigt sind. Während der Bewegung aus der Position 15ʺ an die Position 15‴ schwenkt dann jedes Gruppierelement 15 um die von seinen Gelenkbolzen 30 gebildete Schwenkachse in der Form, daß sich die freien Enden der Gruppierfinger 17 bei diesem Schwenken entgegen der Förderrichtung A bewegen und in der Position 15‴ mit ihrer Längserstreckung mit der Vertikalen einen Winkel aʹ einschließen und zwar derart, daß die Gruppierfinger 17 entgegen der Förderrichtung A geneigt sind. Der effektive Abstand, den die Gruppierfinger 17 der in den Positionen 15ʺ und 15‴ befindlichen Gruppierelemente 15 in Förderrichtung A voneinander aufweisen (Zwickelmaß), ist somit abhängig von den beiden Winkeln a und aʹ. Diese sind wiederum abhängig von dem Abstand zwischen dem Zapfen 34 und dem Gelenkbolzen 30 am Lenkarm 32, d.h. durch Anheben der Lagerzapfen 27 und 28 können die genannten Winkel vergrößert und damit das Zwickelmaß verkleinert und durch Absenken der Lagerzapfen 27 und 28 können die genannten Winkel verkleinert und damit das Zwikkelmaß vergrößert werden. Hiermit ist es auf besonders einfache Weise möglich, die Gruppiereinrichtung 7 an unterschiedliche Flaschendurchmesser anzupassen.

Die mit Hilfe der Gelenkbolzen 30 zwischen den beiden Ketten 18 gehaltenen Gruppierelemente 15 bzw. Balken 16 werden mit den Ketten 18 auf der von diesen bestimmten Bewegungsbahn mitbewegt, wobei die Kette 24 mit den mit den Lenkarmen 32 zusammenwirkenden Zapfen 34 lediglich dazu dient, die Gruppierelemente 15 während der Bewegung in einer, sich aus der Bewegungsbahn der Zapfen 34 ergebenden Orientierung zu halten, die durch vertikale Verstellung der Lager 27ʹ und 28ʹ für die Lagerzapfen 27 und 28 veränderbar ist.

Wie die Figur 4 zeigt, sind die beiden Wellen 22 und 23 an ihrem in dieser Figur rechten Ende jeweils in eiem gehäuseseitigen Lager 37 gelagert, welches sich an der dortigen, den Lagern 27ʹ und 28ʹ gegenüberliegenden Längsseite des Gehäuses 19 ganz rechts außen und in Blickrichtung auf diese Längsseite vor dem in der Figur 4 rechten Kettenrad 20 bzw. 21 befinden. Da sich die in der Figur 4 an der linken Seite der Balken 16 der Gruppierelemente 15 an diesen vorgesehenen Lenkarme 32 beim Umlaufen der Gruppierelemente 15 in einer vertikalen Ebene bewegen, die zwischen der Ebene der dortigen linken Kette 18 und der vertikalen Ebene der Kette 24 liegt sowie die Achsen der Wellen 22 und 23 schneidet, ist eine den Lagern 37 entsprechende gehäuseseitige Lagerung der Wellen 22 und 23 an ihrem in der Figur 4 linken Ende nicht möglich. Vielmehr ist zur dortigen Lagerung der Wellen 22 und 23 jeweils ein Lager 38 vorgesehen, welches dem in der Figur 4 linken, d.h. der Kette 24 näherliegenden Kettenrad 20 bzw. 21 unmittelbar benachbart im Bereich zwischen den beiden von den Ketten 18 gebildeten vertikalen Ebenen angeordnet ist, wobei jede Welle 22 und 23 mit ihrem in der Figur 4 linken Ende über das zugehörige Lager 38 vorsteht und an diesem Ende das in dieser Figur linke Kettenrad 20 bzw. 21 trägt. Jedes Lager 38 ist an einem freien Ende, d.h. in der Figur 4 an dem linken Ende eines Trägers bzw. einer Traverse befestigt, und zwar an einer sich von diesem Ende nach unten und in bzw. gegen die Förderrichtung A erstreckenden, an der betreffenden Traverse 39 vorgesehenen Platine. Die Traversen 39 liegen jeweils mit ihrer Längserstreckung in horizontaler Richtung und senkrecht zur Förderrichtung A.

Jede Traverse 39 ist mit ihrer oberen Längskante unterhalb der von den oberen Längen 18ʹ gebildeten horizontalen Ebene und mit ihrer unteren Längskante oberhalb der von den unteren Längen 18ʺ gebildeten horizontalen Ebene angeordnet und ist außerdem in horizontaler Richtung gegenüber den an den Wellen 22 und 23 vorgesehenen Kettenrädern 20 und 21 derart versetzt, daß sich beide Traversen 39, die im Bereich ihres in der Figur 4 rechten Endes von der dortigen Kette 18 umschlossen sind, innerhalb des von den Kettenrädern 20 und 21 freien Raumes erstrecken. Die beiden Traversen 39 sind an ihren die Lager 38 aufweisenden Enden zur Erhöhung der statischen Festigkeit vorzugsweise miteinander verbunden, und zwar dadurch, daß die beiden Lager 38 an einer gemeinsamen Platine vorgesehen sind, die dann an den freien Enden beider Traversen 39 befestigt ist. Das andere Ende, d.h. das in der Figur 4 rechte Ende jeder Traverse 39 ist zwischen den beiden Lagern 37 am Gehäuse 19 bzw. an einem entsprechenden Teil des zugehörigen Maschinengestells befestigt.

Zum Antrieb der Ketten 18 und 24 ist unterhalb der von der untere Länge 24ʺ gebildeten horizontalen Ebene eine Welle 40, die mit ihrer Achse in horizontaler Richtung und senkrecht zur Förderrichtung A liegt, beidendig gelagert, und zwar mit den gehäuseseitigen Lagern 41 und 42. Auf der Welle 40 sitzt ein Kettenrad 43, welches über eine Kette 44 mit einem Kettenrad 45 antriebsmäßig verbunden ist, wobei letzteres auf dem Lagerzapfen 27 zwischen dem Lager 27ʹ und dem Kettenrad 25 sitzt und zum Antrieb dieses Kettenrades dient. Die von der geschlossenen Schlaufe der Kette 44 gebildete vertikale Ebene liegt in Blickrichtung auf die in der Figur 4 linke Längsseite der Gruppiereinrichtung 7 vor der von der Kette 24 gebildeten vertikalen Ebene.

Auf der Welle 40 sitzt weiterhin ein Kettenrad 46, welches über eine Kette 47 mit einem Kettenrad 48 antriebsmäßig verbunden ist. Das Kettenrad 48 sitzt zusammen mit einem weiteren, einen kleineren Durchmesser aufweisenden Kettenrad 49 auf einem gemeinsamen, nicht näher bezeichneten und mit seiner Achse in horizontaler Richtung sowie senkrecht zur Förderrichtung liegenden Lagerbolzen, der an einem Ende ähnlich den Lagerbolzen 27 und 28 in einem gehäuseseitigen Lager gelagert ist, welches an der den Lagern 27ʹ und 28ʹ gegenüberliegenden Längsseite der Gruppiereinrichtung 7 bzw. des Gehäuses 19 vorgesehen ist. Das Kettenrad 49 ist über eine Kette 50 antriebsmäßig mit einem Kettenrad 51 verbunden, welches auf der Welle 23 zwischen dem Lager 37 und dem benachbarten Kettenrad 21 sitzt und zum Antrieb der Welle 23 bzw. der beiden Kettenräder 21 dient. Der Antrieb für die Kette 24 befindet sich somit in der Figur 4 an der linken Längsseite der Gruppiereinrichtung 7 und mit Blickrichtung auf diese Längsseite vor der vertikalen Ebene der Kette 24, während der gemeinsame Antrieb für die beiden Ketten 18 in der Figur 4 auf der rechten Längsseite der Gruppiereinrichtung 7 vorgesehen ist, und zwar mit Blickrichtung auf diese Längsseite vor der vertikalen Ebene der dortigen Kette 18.

Auf der Welle 40 sitzt weiterhin noch ein in der Figur 4 nicht gezeigtes Kettenrad 52 (Fig. 1), mit welchem die Welle 40 über eine Kette 53 antriebsmäßig mit einem Kettenrad 54 verbunden ist, welches auf der Ausgangswelle des Getriebemotors 23ʹ sitzt.

Die in den Figuren 7 - 9 dargestellte Gruppiereinrichtung 7a besitzt wiederum vier Gruppiereelemente 15a, die hinsichtlich ihrer Funktion den Gruppierelementen 15 der Gruppiereinrichtung 7 entsprechen und von denen jedes Gruppierelement 15a von einem Balken 60 gebildet ist, der mit seiner Längserstreckung in horizontaler Richtung und senkrecht zur Förderrichtung A liegt. Auf diesem Balken 60 sind in Balkenlängsrichtung gegeneinander versetzt mehrere als trapezförmige Platten ausgebildete Führungssegmente oder -Elemente 61 vorgesehen, die mit ihren Oberflächenseiten jeweils senkrecht zur Längserstreckung des Balkens 60 liegen und dort so angeordnet sind, daß die Führungselemente 61 nicht nur über die obere Längsseite jedes Balkens 60 vorstehen, sondern jeweils Paare von Führungselementen 61 bilden, von denen die Führungselemente 61 jedes Paares jeweils beidseitig von einer Scharnierbandkette 10 bzw. einer der zumindest an ihren Führungsflächen aus Kunststoff hergestellten Führungen bzw. Führungsleisten 62 angeordnet sind, die an dem Rahmen bzw. Vorrichtungestell 63 der Gruppiereinrichtung 7a zum Führen der oberen, horizontalen Längen der Scharnierbandketten 10 vorgesehen sind. Jedes Führungselement 61 weist weiterhin zwei über die Unterseite des zugehörigen Balkens 60 wegstehende Führungsansätze 64 auf, die beim Bewegen der Gruppierelemente 15a aus der Position 15aʺʺ in die Position 15aʹ seitlich an ebenfalls am Vorrichtungsgestell 63 vorgesehenen Führungen bzw. Führungsleisten 65 gleiten, die wiederum zumindest an ihren Führungs-bzw. Gleitflächen aus Kunststoff hergestellt sind. Durch die Führungselemente 61, die Führungsansätze 64 sowie die zugehörigen Führungen 62 und 65 ist beim Umlauf der Gruppierelemente 15a eine einwandfreie Positionierung dieser Elemente insbes. auch quer zur Förderrichtung A gewährleistet. An jedem Führungselement 61 ist ein über dieses Führungselement nach oben wegstehender Gruppierfinger 66 vorgesehen, wobei diese Gruppierfinger 66 in ihrer Funktion den Gruppierfingern 17 entsprechen und derart ausgebildet sind, daß bei der Bewegung der Gruppierelemente 15a von der Position 15aʺ an die Position 15a‴ beidseitig von jeder Sharnierbandkette 10 ein Grupperfinger 66 mit seinem oberen, freien Ende über die Oberseite der betreffenden Scharnierbandkette 10 vorsteht. Da bei der dargestellten Ausführungsform wiederum vier Scharnierbandketten 10 vorgesehen sind, weist jedes Gruppierelement 15a insgesamt acht Führungselemente 61 und acht Gruppierfinger 66 auf.

Die Gruppierelemente 15a werden durch eine entsprechende Getriebeeinrichtung auf einer in sich geschlossenen Bahn derart bewegt, daß jedes Gruppierelement 15a am Einlauf der Gruppiereinrichtung 7a aus der abgesenkten Position 15aʹ zunächst in die angehobene Position 15aʺ bewegt wird, wobei sich die in die Position 15aʹ weit unterhalb der oberen Länge der Scharnierbandketten 10 befindlichen Gruppierfinger 66 bei Erreichen der Position 15aʺ mit ihren freien Enden über die oberen Längen dieser Scharnierbandketten 10 vorstehen und somit als Anschlagflächen wirksam sind. Anschließend wird jeds Gruppierelement 15a bei weiterhin über die Oberseite der oberen Längen der Scharnierbandketten 10 vorstehenden Gruppierfingern 66 in horizontaler Richtung, d.h. in Förderrichtung A bewegt, bis das betreffende Gruppierelement 15a am Auslauf der Gruppiereinrichtung 7a die Position 15a‴ erreicht hat. Daran anschließend wird jedes Gruppierelement 15a wieder abgesenkt, wobei die Gruppierfinger 66 aus der Bewegungsbahn der Flaschen 6 herausbewegt werden. Sobald das betreffende Gruppierelement 15a die untere Position 15aʺʺ erreicht hat, in welcher die Gruppierfinger 66 wieder mit Abstand unterhalb der oberen Längen der Scharnierbandketten 10 angeordnet sind, bewegt sich das betreffende Gruppierelement 15a in horizontaler Richtung und entgegen der Förderrichtung A in die Ausgangsposition 15aʹ zurück.

Die Anzahl der Gruppierelemente 15a ist auch bei dieser Ausführung bezogen auf die gesamte Länge der beschriebenen Bewegungsbahn so gewählt, daß immer dann, wenn ein Gruppierelement 15a die Position 15a‴ erreicht hat, ein nachfolgendes Gruppierelement 15a die Position 15aʺ eingenommen hat. Weiterhin ist die Geschwindigkeit, mit der sich die Gruppierelemente 15a von der Position 15aʺ an die Position 15a‴ bewegen, kleiner als die Fördergeschwindigkeit der Scharnierbandketten 10. Hierdurch wird erreicht, daß durch jedes Gruppierelement 15a bzw. durch dessen Gruppierfinger 66 nach dem Verlassen der Position 15aʺ die nachfolgenden, unmittelbar gegeneinander anliegenden bzw. anstehenden Flaschen 6 der Flaschenreihen gegen die größere Fördergeschwindigkeit der Scharnierbandketten 10 zurückgehalten werden und entsprechend der geringeren Geschwindigkeit des betreffenden Gruppierelementes 15a verlangsamt in Richtung vom Einlauf aus den Auslauf der Gruppiereinrichtung 7a bewegt werden.

Sobald ein die Flaschen 6 zurückhaltendes Gruppierelement 15a die Position 15a‴ bzw. den Auslauf der Gruppiereinrichtung 7a erreicht und sich somit zwischen dem Einlauf und dem Auslauf der Gruppiereinrichtung 7a in jeder Reihe des Flaschenstromes eine der abzutrennenden Flaschengruppe 5 entsprechende Anzahl von Flaschen befindet, auf keinen Fall bevor dieses Gruppierelement 15a die Position 15a‴ verläßt und mit seinen Gruppierfingern 66 die zurückgehaltenen Flaschen 6 freigibt, haben sich die Gruppierfinger 66 eines nachfolgenden Gruppierelementes 15a an der Position 15aʺ, d.h. am Einlauf der Gruppiereinrichtung 7a zwischen die letzten Flaschen 6 der abzutrennenden Flaschengruppe 5 und die nachfolgenden Flaschen 6 hineinbewegt, und zwar jeweils beidseitig von dem Bereich, an dem diese Flaschen 6 dort noch gegeneinander anliegen. Anschließend werden durch das Abtauchen des vorausgehenden, die Position 15a‴ verlassenden Gruppierelementes 15a die die abzutrennende Flaschengruppe 5 bildenden Flaschen 6 freigegeben und als Flaschengruppe 5 durch die Scharnierbandketten 10 mit größerer Geschwindigkeit weggefördert. Die dieser Flaschengruppe 5 nachfolgenden Flaschen 6 liegen dann gegen die Gruppierfinger 66 des nachfolgenden, sich nun von der Position 15aʺ an die Position 15a‴ bewegenden Gruppierelementes 15a an und werden mit diesem verlangsamt an den Auslauf bewegt und dort freigegeben, nachdem ein weiteres nachfolgendes Gruppierelement 15a die Position 15aʺ erreicht hat.

Der am Einlauf der Gruppiereinrichtung 7a anstehende dicht gepackte Flaschenstrom wird somit in einzelne Gruppen 5 aufgeteilt. Für eine einwandfreie Funktion auf der Gruppiereinrichtung 7a ist es notwendig, daß der wirksame Abstand (Zwickelmaß), den die Gruppierfinger 66 zweier in den Positionen 15aʺ und 15a‴ befindlicher Gruppierelemente 15a in Förderrichtung A voneinander aufweisen, etwas kleiner ist als die Summe der Durchmesser der in jeder Reihe der Gruppen 5 angeordneten Flaschen 6, d.h. bei den angenommenen fünf Flaschen 4 in jeder Reihe muß dieser Abstand etwas kleiner sein als der fünffache Durchmesser der Flaschen 6. Auch die Gruppiereinrichtung 7a gestattet eine Anpassung dieses Zwickelmaßes an den jeweiligen Durchmesser der verarbeiteten Flaschen 6.

Für die Bewegung der Gruppierelemente 15a sind zunächst zwei jeweils von einer in sich geschlossenen, endlos umlaufenden Kette 67 gebildete Antriebselemente vorgesehen, wobei jede Kette 67 an einer Längssseite der Gruppiereinrichtung 7a bzw. des Vorrichtungsgestells 63, welches beispielsweise einen Teil des Transporteurs 4 bildet, vorgesehen ist. Jede Kette 67 ist über zwei Kettenräder 68 und 69 derart geführt, daß sie eine obere, horizontale und sich in Förderrichtung A bewegende Länge 67ʹ sowie eine untere, ebenfalls horizontale und sich entgegen der Förderrichtung A bewegende Länge 67ʺ aufweist, wobei beide Längen unterhalb einer horizontalen, von den oberen Längen der Scharnierbandketten 10 gebildeten Ebene liegen. Die im Bereich des Auslaufes der Gruppiereinrichtungen 7a vorgesehenen Kettenräder 68 der beiden Ketten 67 sind jeweils an einem Ende eines balkenartigen, mit seiner Längserstreckung in horizontaler Richtung sowie senkrecht zur Förderrichtung A angeordneten Lagerelementes 70 gelagert. Zur Lagerung der beiden anderen, im Bereich des Einlaufs vorgesehenen Kettenräder 69 dient ein entsprechendes Lagerelement 71. Zur Halterung der Lagerelemente 70 dienen zwei mit ihrer Längserstreckung in Förderrichtung A liegende Führungsstangen 72, die jeweils in ihrer Mitte an einer am Vorrichtungsgestell 63 befestigten Quertraverse 73 gehalten sind und beidendig über diese Quertraverse 73 wegstehen. Auf den Führungsstangen 72 sind die Lagerelemente 70 und 71 in Richtung der Längsachse dieser Führungsstangen 72 verschiebbar angeordnet, so daß durch Vergrößerung des Abstandes zwischen den Lagerelementen 70 und 71 die Ketten 67 gespannt werden können. Hierfür sind beispielsweise zwischen den Lagerelementen 70 und 71 und der Quertraverse 73 wirkende gewindeartige Spannvorrichtungen 74 vorgesehen. Anstelle von oder zusätzlich zu den Spannvorrichtungen 74 können auch zwischen den Lagerelementen 70 bzw. 71 und der Quertraverse 73 wirkende und die Führungsstangen 72 vorzugsweise umschließende Druckfedern 75 vorgesehen sein, die dann bei einer von den Spannvorrichtungen 74 vorgegebenen Voreinstellung eine federnde Spannung der Ketten 67 bewirken. Zum Antrieb der beiden Ketten 67 dienen zwei Kettenräder 76, die auf einer gemeinsamen, am Vorrichtungsgestell 63 drehbar gelagerten Welle 77 angeordnet sind und die jeweils mit der unteren Lägne 67ʺ einer Kette 67 in Eingriff sind. Die Welle 77 ist über ein Kettenrad 78 und über eine nicht näher dargestellte Antriebskette von dem Getriebemotor 23ʹ (Fig. 1) angetrieben. Es ist aber auch ein anderer Antrieb für die Ketten 67 möglich.

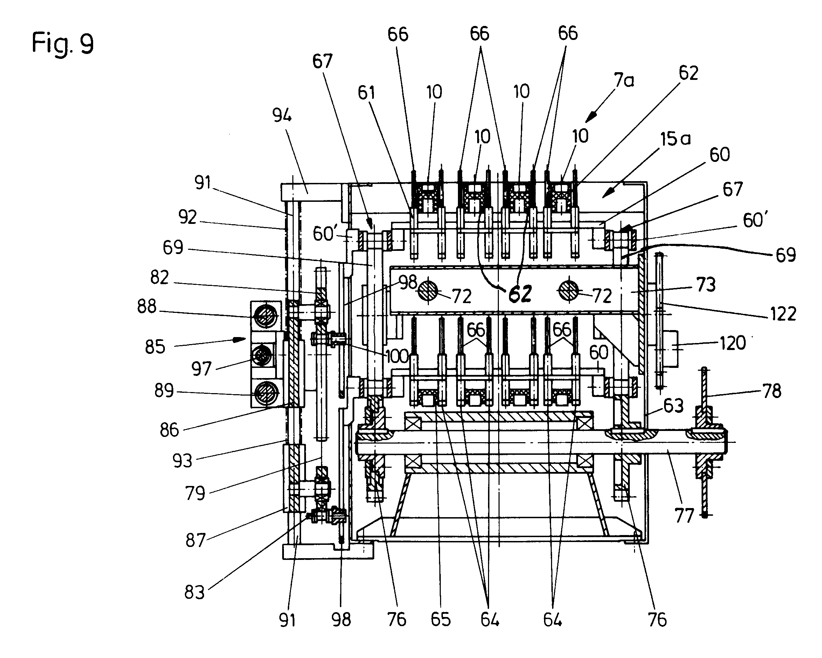

Innerhalb des Vorrichtungsgestells 63 ist an einer Längsseite der Gruppiereinrichtung 7a ein ebenfalls von einer in sich geschlossenen und endlos angetriebenen Kette 79 gebildetes Steuer- und Verstellelement vorgesehen. Die Kette 79, die sich bei der für die Fig. 9 gewählten Dartstellung an der dortigen linken Seite der Gruppiereinrichtung 7a befindet, ist über zwei größere Kettenräder 80 und 81 sowie zusätzlich auch über zwei kleinere Kettenräder 82 und 83 geführt, die sämtlichst in einer gemeinsamen, vertikalen und parallel zur Förderrichtung A liegenden Ebene angeordnet sind und von denen die Kettenräder 80 und 81 bzw. deren Achsen in Förderrichtung A auf gleichem horizontalen Niveau angeordnet sind. die Kettenräder 82 und 83 bzw. deren Achsen sind im Bereich einer zwischen den Kettenrädern 80 und 81 liegenden, jeweils gleichen Abstand von diesen Kettenrädern aufweisenden und senkrecht zur Förderrichtung A veralufenden vertikalen Mittelebene M derart angeordnet, daß sich das Kettenrad 82 in vertikaler Richtung über dem Kettenrad 83 befindet, der jeweils untere Umfangsbereich des Kettenrades 82, über welchen (Umfangsbereich) die Kette 79 geführt ist, in vertikaler Richtung unterhalb des jeweils oberen Umfangsbereiches der Kettenräder 80 und 81 liegt und außerdem auch das untere Kettenrad 83 in vertikaler Richtung unterhalb der Kettenräder 80 und 81 derart vorgesehen ist, daß sich für die Kette 79 ein herzartiger Verlauf ergibt mit einer oberen Länge 79ʹ sowie einer unteren Länge 79ʺ, von denen die Länge 79ʹ ausgehend von dem im Bereich des Einlaufs der Gruppiereinrichtung 7a vorgesehenen Kettenrad 81 zunächst schräg nach unten und anschließend (nach dem Kettenrad 82) zu dem im Bereich des Auslasses vorgesehenen Kettenrad 80 wieder schräg nach oben geführt ist, und von denen die Länge 79ʺ ausgehend von dem Kettenrad 80 zunächst schräg nach unten und anschließend (nach dem Kettenrad 83) zum Kettenrad 81 wieder schräg nach oben verläuft. Das Kettenrad 80 ist mittels eines horizontalen und mit seiner Achse senkrecht zur Förderrichtung A liegenden Lagerzapfens drehbar an einem Lagerelement 84 befestigt. In gleicher Weise sind das Kettenrad 81 an einem Lagerelement 85, das Kettenrad 82 an einem Lagerelement 86 und das Kettenrad 83 an einem Lagerelement 87 drehbar gelagert. Die Lagerelemente 84 und 85 sind jeweils an zwei horizontalen Führungsstangen 88 und 89 in horizontaler Richtung sowie in Förderrichtung A verschiebbar am Vorrichtungsgestell 63 vorgesehen (Doppelpfeile C). In ähnlicher Weise sind die Lagerelemente 66 und 67 an zwei vertikalen Führungsstangen 90 und 91 in vertikaler Richtung verschiebbar am Vorrichtungsgestell 63 angeordnet. Auf den Führungsstangen 90 und 91 sind jeweils zwei diese Führungsstangen umschliessende Druckfedern 92 und 93 vorgesehen, von denen sich die oberen Druckfedern 92 mit ihrem oberen Ende jeweils an einem am Vorrichtungsgestell 63 vorgesehenen Haltearm 94 für die Führungsstangen 90 und 91 und mit ihrem unteren Ende an der Oberseite des Lagerelementes 86 abstützen. Die ebenfalls die Führungsstangen 90 und 91 umschließenden unteren Druckfedern 93 wirken zwischen der Unterseite des Lagerelementes 86 und der Oberseite des Lagerelemente 87, so daß die beiden Lagerelemente 86 und 87 und damit auch die an diesen vorgesehenen Kettenräder 82 und 83 zum Spannen der Kette 79 in vertikaler Richtung nach unten vorgespannt sind. Die Lagerelemente 84 und 85 sind zwischen den beiden Führungsstangen 88 und 89 jeweils mit einem Muttergewindestück 95 bzw. 96 versehen, die in das Außengewinde bzw. in Gewindeabschnitte 97ʹ und 97ʺ einer Gewindespindel 97 eingreifen, die mit ihrer Längserstreckung in horizontaler Richtung und in Förderrichtung A an der in der Fig. 9 linken Längsseite der Gruppiereinrichtung 7a um ihre Achse am Vorrichtungsgestell 63 drehbar gelagert ist. Der mit dem Muttergewindestück 95 am Lagerelement 84 zusammenwirkende Gewindeabschnitt 97ʹ ist gegensinnig zu dem mit dem Muttergewindestück 96 am Lagerelement 85 zusammenwirkenden Gewindeabschnitt 97ʺ ausgebildet, d.h. der Gewindeabschnitt 97ʹ ist beispielsweise ein Linksgewinde und der Gewindeabschnitt 97ʺ ein Rechtsgewinde, so daß der Abstand der Lagerelemente 84 und 85 und damit der horizontale Abstand der Kettenräder 80 und 81 beim Drehen der Gewindespindel 97 in der einen Richtung vergrößert sowie beim Drehen der Gewindespindel 97 in der anderen Richtung verkleinert wird.

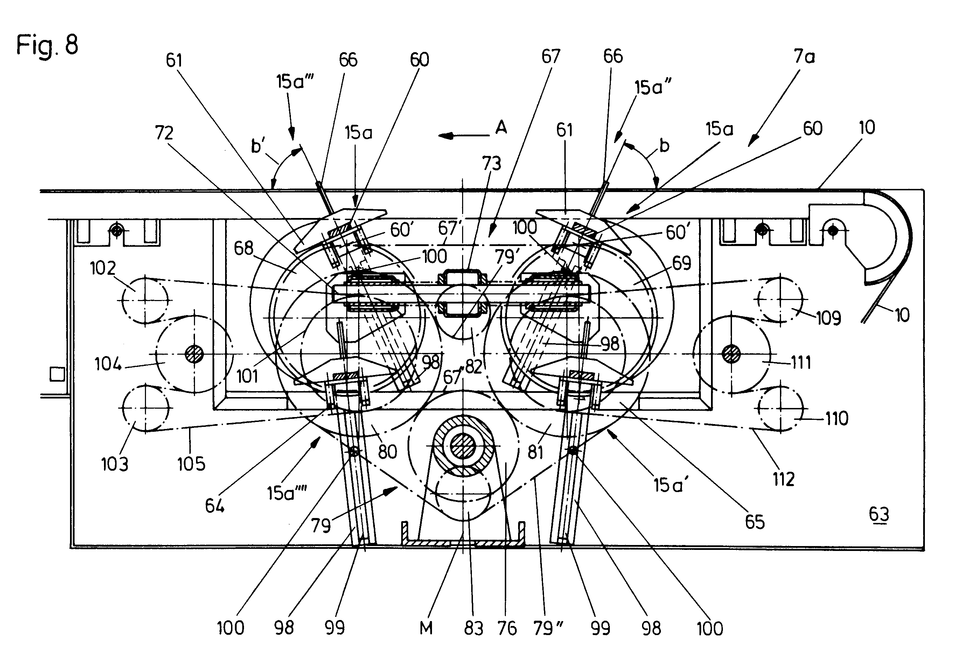

Wie insbes. die Figur 8 zeigt, sind die Ketten 67 und 79 bzw. die zugehörigen Kettenräder 68, 69 bzw. 80 bis 83 derart angeordnet, daß sich die von den Ketten 67 und 79 gebildeten Schlaufen in Blickrichtung auf eine Längsseite der Gruppiereinrichtung 7a teilweise überdecken, wobei in jeder durch die Einstellung der Lagerelemente 84 und 85 möglichen Lage der Kettenräder 80 und 81 und der sich hieraus in Anpassung an diese Einstellung ergebenden Lage der Kettenräder 82 und 83 die obere Länge 79ʹ der Kette 79 tiefer liegt als die obere Länge 67ʹ der Ketten 67 und in gleicher Weise auch die untere Länge 79ʺ der Kette 79 tiefer liegt als die untere Länge 67ʺ der Ketten 67. Die beiden Ketten 67 besitzen jeweils die gleiche Länge und sind demnach auch hinsichtlich ihrer Kettenräder 68 und 69 identisch ausgebildet. Die Kette 79 hat eine größere Länge als die Ketten 67, d.h. der Umfang der von der Kette 79 gebildeten Schlaufe ist größer als der Umfang der jeweils von den Ketten 67 gebildeten Schlaufe, was sich schon durch den herzförmigen Verlauf der Kette 79 ergibt. Die Kette 79 ist über die beiden Kettenräder 80 und 81 derart angetrieben, daß sich nicht nur die obere Länge 79ʹ gleichsinnig mit der oberen Länge 67ʹ, d.h. in gleicher Richtung mit dieser oberen Länge 67ʹ und die untere Länge 79ʺ gleichsinnig mit der unteren Länge 67ʺ bewegen, sondern auch die Umlaufgeschwindigkeit der Kette 79 gleich der Umlaufgeschwindigkeit der Ketten 67 ist, d.h. ein betrachtetes Kettenglied der Kette 79 in der gleichen Zeit einen vollen Umlauf durchführt, in der auch ein betrachtetes Kettenglied an einer der beiden Ketten 67 einen vollen Umlauf ausführt. Wegen der größeren Länge der Kette 79 ist allerdings die tatsächliche Geschwindigkeit (Weggeschwindigkeit), d.h. die in einer bestimmten Zeitdauer zurückgelegte Wegstrecke insbes. auch an der oberen Länge 79ʹ der Kette 79 größer als an der oberen Länge 67ʹ der Ketten 67.

Zwischen den beiden Ketten 67 sind die Balken 60 der vier Gruppierelemente 15a beidendig (an jeweils einem Anlenkpunkt 60ʹ) schwenkbar gehalten, und zwar derart, daß sie mit ihrer Längs- und Schwenkachse parallel zu den Drehachsen der Kettenräder 68 und 69, aber auch der Kettenräder 80 - 83 liegen. Die schwenkbare Befestigung der Balken 60 an den Ketten 67 bzw. deren Kettenglieder ist z.B in gleicher Weise realisiert, wie dies oben für die Balken 16 der Gruppiereinrichtung 7 beschrieben wurde. An einer Seite jedes Balkens 60 steht über den dortigen Anlenkpunkt 60ʹ mit der zugehörigen Kette 67 ein als langgestreckter Hebel ausgebildeter Lenkarm 98 über die Unterseite des jeweiligen Balkens 60 vor. Der mit seiner Längserstreckung senkrecht zur Längserstreckung des zugehörigen Balkens 60 liegende Lenkarm 98 ist mit einem als Führung dienenden und vom freien Ende des Lenkarmes 98 ausgehenden Längsschlitz 99 versehen, der bis in die Nähe des einen Anlenkpunktes 60ʹ reicht. In jedem Längsschlitz greift ein Zapfen 100 ein, der an der Kette 79 vorgesehen ist und beispielsweise wiederum von der überstehenden Länge eines zwei Kettenglieder der Kette 79 miteinander verbindenden Gelenkbolzens gebildet ist.

Es versteht sich, daß die Anlenkpunkte 60ʹ an den Ketten 67 sowie auch die Zapfen 100 an der Kette 79 jeweils in gleichmäßigen, der Anzahl der Gruppierelemente 15a entsprechenden Abständen vorgesehen sind, und zwar derart, daß bei jedem in der Position 15aʺ befindlichem Gruppierelement 15a sich der Anlenkpunkt 60ʹ und der Zapfen 100 jeweils am Anfang der oberen Länge 67ʹ bzw. 79ʹ und bei jedem in der Position 15a‴ befindlichem Gruppierelement 15a sich der Anlenkpunkt 60ʹ und der Zapfen 100 am Ende der oberen Länge 67ʹ bzw. 79ʹ befinden. Bei der insbes. in den Figuren 7 und 8 gezeigten Einstellung der Lagerelemente 84 und 85 eilt der Zapfen 100 in der Position 15aʺ den zugehörigen Anlenkpunkten 60ʹ vor und in der Position 15a‴ diesen Anlenkpunkten 60ʹ nach. Hierdurch ist jedes Gruppierelement 15a beim Erreichen der Position 15aʺ um seine Anlenkpunkte 60ʹ derart geschwenkt, daß die Gruppierfinger 66 bzw. deren Längserstreckung mit der Vertikalen einen Winkel b einschließen, der sich entgegen der Förderrichtung A öffnet. Während der Bewegung aus der Position 15aʺ an die Position 15a‴ schwenkt dann jedes Gruppierelement 15a um die Anlenkpunkte 60ʹ derart, daß an der Position 15a‴ die Gruppierfinger 66 bzw. deren Längserstreckung mit der Vertikalen einen Winkel bʹ einschließen, der sich in Förderrichtung A öffnet. Der effektive Abstand, den die Gruppierfinger 66 zweier in den Positionen 15aʺ und 15a‴ befindlicher Gruppierelemente 15a in Förderrichtung voneinander aufweisen (Zwickelmaß), ist somit abhängig von den beiden Winkeln b und bʹ. Diese Winkel b und bʹ sind wiederum abhängig von dem horizontalen Abstand der Zapfen 100 der in den Positionen 15aʺ und 15a‴ befindlichen Gruppierelemente 15a, d.h. letztlich auch abhängig von dem horizontalen Abstand der Kettenräder 80 und 81, so daß mit Vergrößerung des Abstandes der Kettenräder 80 und 81 bzw. der zugehörigen Lagerelemente 84 und 85 die Winkel b und bʹ vergrößert und damit das Zwickelmaß verkleinert und in umgekehrter Weise mit Verkleinerung des Abstandes zwischen den Kettenrädern 80 und 81 die Winkel b und bʹ verkleinert und damit das Zwickelmaß vergrößert werden können. Hiermit ist es durch Veränderung der Lage (aber auch Form) der von der Kette 79 gebildeten Schlaufe auf besonders einfache Weise möglich, die Gruppiereinrichtung 7a mit Hilfe der Geweindespindel 97 hinsichtlich ihres Zwickelmaßes an unterschiedliche Flaschendurchmesser anzupassen, wobei durch die Kettenräder 82 und 83 und die zugehörigen Druckfedern 92 und 93 stets für eine ausreichende Spannung der Kette 79 gesorgt wird.

Zum Antrieb der Kettenräder 80 und 81 dient jeweils ein Kettentrieb, der für das Kettenrad 80 aus einem antriebsmäßig mit diesem Kettenrad verbundenen Kettenrad 101, aus zwei frei drehbar gelagerten Kettenrädern 102 und 103, aus einem angetriebenen Kettenrad 104 sowie aus einer über die vorgenannten Kettenräder geführten Antriebskette 105 besteht. Die Kettenräder 102 und 103 sind in vertikaler Richtung übereinander angeordnet und weisen entsprechend Fig. 8 in Förderrichtung A jeweils einen größeren Abstand von dem Kettenrad 101 auf als das in vertikaler Richtung zwischen den Kettenrädern 102 und 103 liegende Kettenrad 104. Die beiden Kettenräder 102 und 103 sind an einem Lagerelement 106 vorgesehen, welches ebenfalls an den Führungsstangen 88 und 89 in horizontaler Richtung sowie in Förderrichtung A oder entgegen dieser Förderrichtung verschiebbar geführt ist und ein Muttergewindestück 107 aufweist, welches in den Gewindeabschnitt 97‴ eingreift, der ebenfalls an der Gewindespindel 97 vorgesehen und gleichsinnig zu dem Gewindeabschnitt 97ʹ ausgebildet ist, dessen Steigung jedoch halb so groß ist wie die Steigung des Gewindeabschnittes 97ʹ. Beim Drehen der Gewindespindel 97 bzw. bei dem hierbei erfolgenden Verstellen des Lagerelementes 84 werden das Lagerelement 106 und damit die Kettenräder 102 und 103 in gleichem Sinne mit verstellt, so daß unabhängig von der jeweiligen Verstellung die antriebsmäßige Verbindung zwischen den Kettenrädern 101 und 104 erhalten bleibt. In gleicher Weise erfolgt der Antrieb des Kettenrades 81 über die Kettenräder 108 - 111 sowie die zugehörige Antriebskette 112, wobei funktionsmäßig das Kettenrad 108 dem Kettenrad 101, die Kettenräder 109 und 110 den Kettenrädern 102 und 103 sowie das Kettenrad 111 dem Kettenrad 104 entsprechen. Die Kettenräder 109 und 110 sind an einem dem Lagerelement 106 entsprechenden, ebenfalls an den Führungsstangen 88 und 89 geführten Lagerelement 113 vorgesehen, welches mit seinem Muttergewindestück 114 allerdings in den an der Gewindespindel 97 vorgesehenen Gewindeabschnitt 97ʺʺ eingreift, der die gleiche Steigung wie der Gewindeabschnitt 97‴ aufweist, jedoch gegensinnig zu diesem ausgebildet ist.

Das Kettenrad 104 sitzt auf dem einen Ende einer am Vorrichtungsgestell 63 drehbar gelagerten Welle 115, die mit ihrer Längserstreckung in horizontaler Richtung und senkrecht zur Förderrichtung A liegt und an deren anderem Ende ein Kettenrad 116 vorgesehen ist, welches über eine Antriebskette 117 antriebsmäßig mit einem Kettenrad 118 verbunden ist, welches seinerseits antriebsmäßig direkt mit einem der Kettenräder 68 verbunden ist, und zwar bei der für die Fig. 7 gewählten Darstellung mit dem an der dortigen unteren Längsseite der Gruppiereinrichtung 7a vorgesehenen Kettenrad 68. In ähnlicher Weise erfolgt der Antrieb des Kettenrades 111 über eine der Welle 115 entsprechende Welle 119, über ein dem Kettenrad 116 entsprechendes Kettenrad 120, über eine der Antriebskette 117 entsprechende Antriebskette 121 sowie über das dem Kettenrad 118 entsprechende, allerdings direkt mit einem der Kettenräder 69 verbundene Kettenrad 122.

Die kleineren Kettenräder 82 und 83 können auch Spannrollen sein. Die Gewindespindel 97 ist jeweils beidendig in einem Lager 123 eines am Vorrichtungsgestell 63 befestigten Trägers 124 gelagert. An den beiden Trägern 124, von denen in der Figur 7 nur einer gezeigt ist, sind auch die Führungsstangen 88 und 89 beidendig befestigt.

Auch bei der Gruppiereinrichtung 7a werden die Gruppierelemente 15a mit den Ketten 67 auf der von diesen bestimmten Bewegungsbahn bewegt, wobei die Kette 79 mit den mit den Lenkarmen 98 zusammenwirkenden Zapfen 100 lediglich dazu dient, die Gruppierelemente 15a bzw. deren Gruppierfinger 66 während der Umlaufbewegung in einer Orientierung zu halten, die sich aus der jeweiligen relativen Lage zwischen den Anlenkpunkten 60ʹ jedes Gruppierelementes 15a und des zugehörigen Zapfens 100 ergibt und die durch horizontale Verstellung der Kettenräder 80 und 81 in der oben beschriebenen Weise veränderbar ist. Da bei der Gruppiereinrichtung 7a die beiden Kettenräder 80 und 81 für die Kette 79 in horizontaler Richtung (Doppelpfeile C) verstellt werden, läßt sich für die Gruppiereinrichtung 7a eine besonders niedrige Bauhöhe erreichen.

Die Erfindung wurde voranstehend an Ausführungsbeispielen beschrieben. Es versteht sich, daß Änderungen sowie Abwandlungen möglich sind. So ist es beispielsweise auch möglich, auf die an den Lagerelementen 84 und 85 vorgesehenen Muttergewindestücke 95 bzw. 96 und auf die zugehörigen Gewindeabschnitte 97ʹ und 97ʺ zu verzichten und dann die horizontale Verstellung der Lagerelemente 84 und 85 und damit der Kettenräder 80 und 81 gegen die Wirkung der Druckfedern 92 und 93 ausschließlich durch das oben beschriebene Verstellen der Lagerelemente 106 und 113 bzw. über die Antriebsketten 105 und 112 zu bewirken.

## Patentansprüche

1. Gruppiereinrichtung zur Bildung von jeweils eine vorgegebene Gruppenlänge aufweisenden Behältergruppen durch Abtrennen einer dieser Gruppenlänge entsprechenden Anzahl von Behältern aus einem über wenigstens einen Förderer zugeführten Behälterstrom, mit mehreren Anschlag-bzw. Stauflächen für die Behälter vorzugsweise an Gruppierfingern bildenden und an wenigstens einem endlos umlaufenden, eine erste Schlaufe bildenden band- oder kettenartigen Antriebselement vorgesehenen Gruppierelementen, deren Anschlag- bzw. Stauflächen auf einer in sich geschlossenen Umlaufbahn bewegt werden und auf einer in Förderrichtung des Förderers veralufenden Teillänge der Umlaufbahn in die Bewegungsbahn der Behälter auf dem Förderer hineinreichen und sich im restlichen Teil der Umlaufbahn außerhalb dieser Bewegungsbahn befinden, wobei der die Gruppenlänge bestimmende Abstand (Zwickelmaß) der auf der Teillänge der Umlaufbahn aufeinanderfolgenden Anschlag- bzw. Stauflächen einstellbar ist, **dadurch gekennzeichnet,**
daß die Gruppierelemente (15, 15a) um eine senkrecht zur Bewegungsrichtung des Antriebselementes (18, 67) verlaufende Schwenkachse (30, 60ʹ) schwenkbar an diesem Antriebselement (18, 67) gehalten sind, daß die Anschlag-bzw. Stauflächen jeweils mit radialem Abstand von dieser Schwenkachse (30, 60ʹ) an den Gruppierelementen (15, 15a) vorgesehen sind, daß jedes Gruppierelement (15, 15a) starr mit einem sich radial zur Schwenkachse (30, 60ʹ) erstreckenden Schwenk- bzw. Lenkarm (32, 98) verbunden ist, der an einem endlos umlaufenden, eine zweite Schlaufe bildenden band- oder kettenartigen Verstellelement (24, 79) an einem Angriffspunkt (34, 100) angreift, daß bei unterschiedlichen Schlaufenlängen des Antriebselementes (18, 67) und des Verstellelementes (24, 79) beide Elemente (18, 24; 67, 79) gleichsinning derart angetrieben sind, daß jedes dieser Elemente in einer bestimmten Zeiteinheit jeweils die gleiche Anzahl von Umläufen ausführt, daß an einem Ende der Teillänge der Umlaufbahn die Schwenkachse (30, 60ʹ) jedes Gruppierelementes (15, 15a) dem Angriffspunkt (34, 100) des zugehörigen Lenkarmes (32, 98) voreilt und am anderen Ende der Teillänge der Umlaufbahn die Schwenkachse (30, 60ʹ) jedes Gruppierelementes (15, 15a) dem Angriffspunkt (34, 100) des zugehörigen Lenkarmes (32, 98) nacheilt, und daß zur Änderung des Abstandes zwischen der Schwenkachse (30, 60ʹ) und dem Angriffspunkt (34, 100) die Lage des Verstellelementes (24, 79) bzw. der von diesem gebildeten zweiten Schlaufe relativ zur Lage des Antriebselementes (18, 67) bzw. der von diesem gebildeten ersten Schlaufe in der Ebene wenigstens einer der beiden Schlaufen verstellbar ist.

2. Gruppiereinrichtung nach Anspruch 1, dadurch gekennzeichnet, daß die Lage des Verstellelementes (24, 79) relativ zur Lage des Antriebselemenets (18, 67) in einer Achsrichtung (B) quer bzw. senkrecht zur Förderrichtung (A) und/oder in einer Achsrichtung (C) parallel zur Förderrichtung verstellbar ist.

3. Gruppiereinrichtung nach Anspruch 1 oder 2, dadurch gekennzeichnet, daß die von dem Antriebselement (18, 67) gebildete erste Schlaufe in einer Ebene liegt, die parallel zu der von der zweiten Schlaufe des Verstellelementes (24, 79) gebildeten Ebene ist,
wobei vorzugsweise die von dem Antriebselement (18, 67) sowie von dem Verstellelement (24, 79) gebildeten Ebenen jeweils vertikale Ebenen sind, die parallel zur Förderrichtung (A) des Förderers (10) liegen,
und/oder wobei vorzugsweise das Antriebselement (18, 67) sowie das Verstellelement (24, 79) unter einer horizontalen, die Standflächen des Förderers (10) für die Behälter (6) einschließenden Ebene angeordnet sind und sich die Anschlag- bzw. Stauflächen bzw. Gruppierfinger (17, 66) an einem Ende der Teillänge der Umlaufbahn von unten her in die Bewegungsbahn der Behälter (6) hineinbewegen und am anderen Ende der Teillänge der Umlaufbahn aus dieser Bewegungsbahn nach unten herausbewegen,
und/oder wobei vorzugsweise das Antriebselement (18, 67) und das Verstellelement (24, 79) über einer horizontalen, die Standflächen des Förderers (10) für die Behälter (6) einschließenden Ebene angeordnet sind und sich die Gruppierelemente (15, 15a) mit ihren Anchlag- bzw. Stauflächen bzw. Gruppierfinger (17, 66) an einem Ende der Teillänge der Umlaufbahn von oben her in die Bewegungsbahn der Behälter (6) hineinbewegen und am anderen Ende der Teillänge der Umlaufbahn aus dieser Bewegungsbahn nach oben herausbewegen.

4. Gruppiereinrichtung nach einem der Ansprüche 1 bis 3, dadurch gekennzeichnet, daß das Antriebselement (18, 67) über wenigstens zwei erste Rollen oder Räder (20, 21; 68, 69) geführt ist und zwischen diesen eine die Teillänge der Umlaufbahn bestimmende erste Länge (18ʹ, 67ʹ) bildet, und daß das Verstellelement (24, 79) über wenigstens zwei zweite Rollen oder Räder (25, 26; 80, 81, 82) geführt ist, zwischen denen das Verstellelement (24, 79) eine erste Länge (24ʹ, 79ʹ) bildet, wobei vorzugsweise immer dann, wenn sich die Schwenkachse (30, 60ʹ) eines Gruppierelementes (15, 15a) auf der ersten Länge (18ʹ, 67ʹ) des Antriebselementes (18, 67) bewegt, sich auch der Angriffspunkt (34, 100) für den zugehörigen Lenkarm (32, 98) auf der ersten Länge (24ʹ, 79ʹ) des Verstellelementes (24, 79) bewegt, und daß vorzugsweise wenigstens eines der zweiten Räder (25, 26; 80, 81, 82) in Richtung senkrecht zu seiner Achse sowie in einer Achsrichtung senkrecht zur Förderrichtung (A) des Förderers (10) und/oder parallel zu dieser Förderrichtung (A) verstellbar ist.

5. Gruppiereinrichtung nach einem der Ansprüche 1 bis 4, dadurch gekennzeichnet, daß die von dem Antriebselement (18, 67) und dem Verstellelement (24, 79) gebildeten Schlaufen einander teilweise überdecken, und zwar vorzugsweise derart, daß die von dem Antriebselement (18, 67) gebildete Schlaufe mit einem dem Förderer (10) zugewendeten Teilbereich über die von dem Verstellelement (24, 79) gebildete Schlaufe vorsteht.

6. Gruppiereinrichtung nach einem der Ansprüche 1 bis 5, dadurch gekennzeichnet, daß sich die Anschlag- bzw. Stauflächen bzw. Gruppierfinger (17, 66) und der Angriffspunkt (34, 100) bei jedem Gruppierelement (15, 15a) auf verschiedenen Seiten der Schwenkachse (30, 60ʹ) befinden.

7. Gruppiereinrichtung nach einem der Ansprüche 4 bis 6, dadurch gekennzeichnet, daß das Antriebselement (18, 67) zwischen den beiden ersten Rädern (20, 21; 68, 69) eine zweite Länge (18ʺ, 67ʺ) bildet, die die zum Rückführen dienende weitere Teillänge der Umlaufbahn bestimmt, und daß das Verstellelement (24, 79) zwischen den beiden zweiten Rädern (25, 26, 80, 81) eine zweite Länge (24ʺ, 79ʺ) bildet, wobei bei einer sich auf der zweiten Teillänge (18ʺ, 67ʺ) des Antriebselementes (18, 67) bewegenden Schwenkachse (30, 60ʹ) eines Gruppierelementes (15, 15a) sich der zugehörige Angriffspunkt (34, 100) auf der zweiten Länge (24ʺ, 79ʺ) des Verstellelementes (24, 79) bewegt.

8. Gruppiereinrichtung nach einem der Ansprüche 4 bis 7, dadurch gekennzeichnet, daß bei Verwendung von ersten Rädern (20, 21) mit jeweils gleichem Durchmesser und zweiten Rädern (25, 26) mit jeweils ebenfalls gleichem Durchmesser der Durchmesser der ersten Räder (20, 21) unterschiedlich von dem Durchmesser der zweiten Räder (25, 26) ist, wobei vorzugsweise der Durchmesser der zweiten Räder (25, 26) größer ist als der Durchmesser der ersten Räder (21, 22).

9. Gruppiereinrichtung nach einem der Ansprüche 1 bis 8, dadurch gekennzeichnet, daß zum Abtrennen von Behältergruppen aus einem mehrspurigen oder -reihigen Behälterstrom der Förderer von mehreren parallel zueinander angeordneten Förderelementen (10) gebildet ist, und daß an jedem Gruppierelement (15, 15a) für jedes Förderelement (10) wenigstens ein Gruppierfinger (17, 66), vorzugsweise jedoch zwei Gruppierfinger (17, 66) vorgesehen sind,
wobei vorzugsweise jedes Gruppierelement (15, 15a) von einem mit seiner Längserstreckung quer bzw. senkrecht zur Förderrichtung (A) der Förderelemente (10) liegenden balkenförmigen Element (16, 60) gebildet ist, welches die Gruppierfinger (17, 66) trägt, um die Schwenkachse (30, 60ʹ) schwenkbar an dem wenigstens einen Antriebselement (18, 67) angelenkt und mit dem am Verstellelement (24, 79) angreifenden Lenkarm (32, 98) starr verbunden ist,
und wobei vorzugsweise das Antriebselement (18, 67) zweifach vorgesehen ist und das balkenartige Element (16) jedes Gruppierelementes (15, 15a) beidendig an jeweils einem Antriebselement (18, 67) angelenkt ist, während das Verstellelement (24, 79) bevorzugt nur einmal vorgesehen ist und das balkenförmige Element (16, 60) jedes Gruppierelementes (15, 15a) einen Lenkarme (32, 98) aufweist.

10. Gruppiereinrichtung nach einem der Ansprüche 1 bis 9, dadurch gekennzeichnet, daß der Lenkarm (32, 98) jedes Gruppierelementes (15, 15a) bzw. Gruppierfingers (17, 66) schwenkbar sowie in Längsrichtung des Lenkarmes (32, 98) verschiebbar am Verstellelement (24, 79) angreift,wobei vorzugsweise der Angriffspunkt jedes Lenkarmes (32, 98) von einer Stift-Schlitz-Führung (33, 34; 99, 100 ) gebildet ist.

11. Gruppiereinrichtung nach einem der Ansprüche 1 bis 10, dadurch gekennzeichnet, daß an den Gruppierelementen (15a) Führungselemente (61, 64) vorgesehen sind, die mit ortsfesten Führungen (62, 65) zusammenwirken, welche vorzugsweise zumindest teilweise auch zum Führen von den Förderer bildenden Transportketten (10) dienen.

## Claims

1. Grouping equipment for the formation of container groups, which each display a preset group length, by separating a number of containers, which corresponds to this group length, from a container stream conveyed forward by way of at least one conveyor, with several abutment or baffle surfaces for the containers preferably at grouping elements, which form grouping fingers and are provided at at least one belt-like or chain-like drive element, which is circulating endlessly and forms a first loop, and the abutment or baffle surfaces of which are moved on a closed circulatory path and on a partial length, which extends in the conveying direction of the conveyor, of the circulatory path reach into the path of movement of the containers on the conveyor and are in the remaining part of the circulatory path disposed outside this path of movement, wherein the spacing (wedge dimension), which determines the group length, of the abutment or baffle surfaces following one on the other on the partial length of the circulatory path is adjustable, characterised thereby, that the grouping elements (15, 15a) are retained at the drive element (18, 67) to be pivotable about a pivot axis (30, 60') extending perpendicularly to the direction of movement of the drive element (18, 67), that the abutment or baffle surfaces are each provided at the grouping elements (15, 15a) at a radial spacing from this pivot axis (30, 60'), that each grouping element (15, 15') is rigidly connected with a pivoting or guiding arm (32, 98), which extends radially of the pivot axis (30, 60') and engages at an engagement point (34, 100) at a belt-like or chain-like endlessly circulating adjusting element (24, 79) forming a second loop, that both elements (18, 24; 67, 69) are in the case of different loop lengths of the drive element (18, 67) and of the adjusting element (24, 79) driven in like sense in such a manner that each of these elements executes the same number of circulations each time in a certain unit of time, that the pivot axis (30, 60') of each grouping element (15, 15a) precedes the engagement point (34, 100) of the associated guide arm (32, 98) at one end of the partial length of the circulatory path and the pivot axis (30, 60') of each grouping element (15, 15a) trails the engagement point (34, 100) of the associated guide arm (32, 98) at the other end of the partial length of the circulatory path, and that - for varying the spacing between the pivot axis (30, 60') and the engagement point (34, 100) - the position of the adjusting element (24, 79) or of the second loop formed by this is adjustable relative to the position of the drive element (18, 67) or of the first loop formed by this and in the plane of at least one of both the loops.

2. Grouping equipment according to claim 1, characterised thereby, that the position of the adjusting element (24, 79) relative to the position of the drive element (18, 67) is adjustable in an axial direction (B) obliquely or perpendicularly to the conveying direction (A) and/or in an axial direction (C) parallelly to the conveying direction.

3. Grouping equipment according to claim 1 or 2, characterised thereby, that the first loop formed by the drive element (18, 67) lies in a plane which is parallel to the plane formed by the second loop of the adjusting element (24, 79), wherein the planes formed by the drive element (18, 67) and by the adjusting element (24, 79) are preferably each vertical planes which lie parallelly to the conveying direction (A) of the conveyor (10) and/or wherein preferably the drive element (18, 67) as well as the adjusting element (24, 79) are arranged below an horizontal plane including the support surfaces of the conveyor (10) for the containers (6) and the abutment or baffle surfaces or the grouping fingers (17, 66) at one end of the partial length of the circulatory path move from below into the path of movement of the containers (6) and at the other end of the partial length of the circulatory path move downwardly out of this path of movement and/or wherein preferably the drive element (18, 67) as well as the adjusting element (24, 79) are arranged above an horizontal plane including the support surfaces of the conveyor (10) for the containers (6) and the grouping elements (15, 15a) move by their abutment or baffle surfaces or the grouping fingers (17, 66) at one end of the partial length of the circulatory path from above into the path of movement of the containers (6) and at the other end of the partial length of the circulatory path move upwardly out of this path of movement.

4. Grouping equipment according to one of the claims 1 to 3, characterised thereby, that the drive element (18, 67) is guided over at least two first rollers or wheels (20, 21; 68, 69) and between these forms a first length (18', 67') determining the partial length of the circulatory path and that the adjusting element (24, 79) is guided over at least two second rollers or wheels (25, 26; 80, 81, 82), between which the adjusting element (24, 79) forms a first length (24', 79'), wherein preferably whenever the pivot axis (30, 60') of a grouping element (15, 15a) moves over the first length (18', 67') of the drive element (18, 67), the engagement point (34, 100) for the associated guide arm (32, 98) also moves over the first length (24', 79') of the adjusting element (24, 79), and that preferably at least one of the second wheels (25, 26; 80, 81, 82) is adjustable in a direction perpendicularly to its axis as well as in an axial direction perpendicular to the conveying direction (A) of the conveyor (10) and/or parallel to this conveying direction (A).

5. Grouping equipment according to one of the claims 1 to 4, characterised thereby, that the loops formed by the drive element (18, 67) and the adjusting element (24, 79) partially overlap each other and preferably namely in such a manner that the loop formed by the drive element (18, 67) projects beyond the loop formed by the adjusting element (24, 79) by a partial region facing the conveyor (10).

6. Grouping equipment according to one of the claims 1 to 5, characterised thereby, that the abutment or baffle surfaces or the grouping fingers (17, 66) and the engagement point (34, 100) are at each grouping element (15, 15a) disposed on different sides of the pivot axis (30, 60').

7. Grouping equipment according to one of the claims 4 to 6, characterised thereby, that the drive element (18, 67) between both the first wheels (20, 21; 68, 69) forms a second length (18", 67"), which determines that further partial length of the circulatory path, which serves for the return, and that the adjusting element (24, 79) between both the second wheels (25, 26, 80, 81) forms a second length (24", 79"), wherein when the pivot axis (30, 60') of a grouping element (15, 15a) moves over the second partial length (18", 67") of the drive element (18, 67), the associated engagement point (34, 100) moves over the second length (24", 79") of the adjusting element (24, 79).

8. Grouping equipment according to one of the claims 4 to 7, characterised thereby, that in the case of use of first wheels (20, 21) each of equal diameter and second wheels (25, 26) each likewise of equal diameter, the diameter of the first wheels (20, 21) is different from the diameter of the second wheels (25, 26), wherein the diameter of the second wheels (25, 26) is preferably greater than the diameter of the first wheels (20, 21).

9. Grouping equipment according to one of the claims 1 to 8, characterised thereby, that for the separating of container groups from a multitrack or multirow container stream, the conveyor is formed of several conveying elements (10) arranged one parallelly to the other and at least one grouping finger (17, 66) is, preferably however two grouping fingers (17, 66) are, provided for each conveying element (10) at each grouping element (15, 15a), wherein each grouping element (15, 15a) is preferably formed by a beam-shaped element (16, 60), which lies by its longitudinal extent obliquely or perpendicularly to the conveying direction (A) of the conveying elements (10), carries the grouping fingers (17, 66), is articulated at the at least one drive element (18, 67) to be pivotable about the pivot axis (30, 60') and which is rigidly connected with the guide arm (32, 98) engaging at the adjusting element (24, 79), and wherein the drive element (18, 67) is preferably provided twice and the beamlike element (16) of the each grouping element (15, 15a) is articulated at both ends to a respective drive element (18, 67), whilst the adjusting element (24, 79) is preferably provided only once and the beam-shaped element (16, 60) of each grouping element (15, 15a) displays one guide arm (32, 98).

10. Grouping equipment according to one of the claims 1 to 9, characterised thereby, that the guide arm (32, 98) of each grouping element (15, 15a) or the grouping fingers (17, 66) engages at the adjusting element (24, 79) displaceably in longitudinal direction of the guide arm (32, 98) as well as pivotably, wherein the engagement point of each guide arm (32, 98) is preferably formed by a pin-and-slot guide (33, 34; 99, 100).

11. Grouping equipment according to one of the claims 1 to 10, characterised thereby, that guide elements (61, 64), which co-operate with fixed located guides (62, 65), which preferably also serve as least partially for the guidance of transport chains (10) forming the conveyor, are provided at the grouping elements (15a).

## Revendications

1. Dispositif de groupement destiné à former des groupes de récipients ayant une longueur prédéterminée, en séparant d'un courant de récipients amenés par au moins un transporteur, un nombre de ces récipients correspondant à cette longueur, ce dispositif comportant un certain nombre d'éléments de groupement qui forment, avantageusement sur des doigts de groupement, des surfaces de butée ou de retenue, qui sont disposés sur au moins un élément d'entraînement en forme de bande ou chaîne sans fin formant une première boucle et dont les surfaces de butée ou de retenue sont déplacées le long d'une trajectoire fermée passant, sur une partie de cette trajectoire orientée dans le sens de l'avance, sur le chemin des récipients portés par le transporteur et se trouvant à l'écart de ce chemin pendant la partie restante de ladite trajectoire, la distance (espacement) -déterminant la longueur du groupe-qui sépare les surfaces de butée ou de retenue successives sur la partie précitée de la trajectoire étant réglable, dispositif caractérisé en ce que les éléments de groupement (15, 15a) sont montés sur un élément d'entraînement (18, 67) et peuvent pivoter sur un axe (30, 60') perpendiculaire au sens d'avance de cet élément d'entraînement (18, 67) ; les surfaces de butée ou de retenue sont formées sur ces éléments de groupement (15, 15a) à une certaine distance de leur axe de pivotement (30, 60') ; chaque élément de groupement (15, 15a) est solidaire d'une bielle (32, 98) qui part radialement d'un axe de pivotement (30, 60') et qui est en prise avec un point d'attaque (34, 100) d'un élément de réglage (24, 79) en forme de bande ou chaîne sans fin formant une seconde boucle ; les boucles formées par l'élément d'entraînement (18, 67) et par l'élément de réglage (24, 79) ayant des longueurs différentes, ces deux derniers éléments (18, 24 ; 67, 79) sont entraînés de façon que chacun d'eux fasse le même nombre de tours dans un intervalle de temps déterminé ; à une extrémité de la partie précitée de la trajectoire, l'axe de pivotement (30, 60') de chaque élément de groupement (15, 15a) est en avance par rapport au point d'attaque (34, 100) de sa bielle (32, 98) et à l'autre extrémité de ladite partie de la trajectoire, l'axe de pivotement (30, 60') de chaque élément de groupement (15, 15a) est en retard par rapport au point d'attaque (34, 100) de sa bielle (32, 98) ; et pour modifier la distance comprise entre l'axe de pivotement (30, 60') et le point d'attaque (34, 100), la position de l'élément de réglage (24, 79) c'est-à-dire la position de la seconde boucle qu'il forme par rapport à la position de l'élément d'entraînement (18, 67), c'est-à-dire la position de la première boucle qu'il forme, peut être modifiée dans le plan d'au moins l'une de ces deux boucles.

2. Dispositif de groupement selon la revendication 1, caractérisé en ce que la position de l'élément de réglage (24, 79) par rapport à celle de l'élément d'entraînement (18, 67) peut être modifiée dans un sens (B) perpendiculaire au sens (A) de l'avance et/ou dans un sens (C) parallèle à ce sens (A) de l'avance.

3. Dispositif de groupement selon la revendication 1 ou 2, caractérisé en ce que la première boucle formée par l'élément d'entraînement (18, 67) est dans un plan qui est parallèle à celui qui est formé par la seconde boucle de l'élément de réglage (24, 79),
les plans formés par cet élément d'entraînement (18, 67) et par cet élément de réglage (24, 79) étant avantageusement des plans verticaux, qui sont parallèles au sens (A) de l'avance du transporteur (10),
et/ou ces éléments d'entraînement (18, 67) et de réglage (24, 79) étant avantageusement disposés plus bas qu'un plan horizontal incluant les surfaces de support des récipients (6) du transporteur (10), les surfaces de butée ou de retenue des doigts de groupement (17, 66) pénétrant en remontant sur le chemin des récipients (6) à une extrémité de la partie précitée de la trajectoire et s'écartant de ce chemin en redescendant à l'autre extrémité de cette partie de la trajectoire,
et/ou les éléments d'entraînement (18, 67) et de réglage (67, 79) étant avantageusement disposés plus haut que le plan horizontal incluant les surfaces de support des récipients (6) du transporteur (10), les surfaces de butée ou de retenue -les doigts de groupement (17, 66)- des éléments de groupement (15, 15a) pénétrant en s'abaissant sur le chemin des récipients à une extrémité de la partie précitée de la trajectoire et s'écartant de ce chemin en remontant à l'autre extrémité de ladite partie de la trajectoire.

4. Dispositif de groupement selon l'une des revendications 1 à 3, caractérisé en ce que l'élément d'entraînement (18, 67) passe sur au moins deux premiers rouleaux, roues ou pignons (20, 21 ; 68, 69) et forme entre eux un premier brin (18', 67') qui définit la partie précitée de la trajectoire ; et l'élément de réglage (24, 79) passe sur au moins deux seconds rouleaux, roues ou pignons (25, 26 ; 80, 81, 82) entre lesquels il forme un premier brin (24', 79') et, lorsque l'axe de pivotement (30, 60') d'un élément de groupement (15, 15a) se déplace sur ce premier brin (18', 67') de l'élément d'entraînement (18, 67), le point d'attaque (34, 100) de la bielle (32, 68) associée se déplace aussi sur le premier brin (24', 79') de l'élément de réglage (24, 79), l'un au moins des seconds pignons (25, 26 ; 80, 81, 82) est avantageusement réglable perpendiculairement à son axe et aussi perpendiculairement au sens (A) de l'avance et/ou parallèlement à ce sens de l'avance.

5. Dispositif de groupement selon l'une des revendications 1 à 4, caractérisé en ce que les boucles formées par l'élément d'entraînement (18, 67) et par l'élément de réglage (24, 79) se superposent partiellement, avantageusement de manière qu'une partie, adjacente au transporteur (10), de la boucle formée par l'élément d'entraînement (18, 67) fasse saillie de la boucle formée par l'élément de réglage (24, 79).

6. Dispositif de groupement selon l'une des revendications 1 à 5, caractérisé en ce que,sur chaque élément de groupement (15, 15a), les surfaces de butée ou de retenue -les doigts de groupement (17, 66)- et le point d'attaque (34, 100) se trouvent des cotés différents de l'axe d'articulation (30, 60').

7. Dispositif de groupement selon l'une des revendications 4 à 6, caractérisé en ce que l'élément d'entraînement (18, 67) forme entre les deux premières roues (20, 21 ; 68, 69) un second brin (18", 67") qui définit l'autre partie de la trajectoire, servant au retour, et l'élément de réglage (24, 79) forme entre les deux secondes roues (25, 26 ; 80, 81) un second brin (24", 79"), si bien que, lorsque l'axe d'articulation (30, 60') d'un élément de groupement (15, 15a) se déplace sur ce second brin (18", 67") de l'élément d'entraînement (18, 67), le point d'attaque (34, 100) correspondant se déplace sur ce second brin (24", 79") de l'élément de réglage (24, 79).

8. Dispositif de groupement selon l'une des revendications 4 à 7, caractérisé en ce que, lorsque les deux premières roues (20, 21) ont un même diamètre et que les secondes roues (25, 26) ont également un même diamètre, le diamètre de ces premières roues (20, 21) est différent de celui de ces secondes roues (25, 26), ce diamètre des secondes roues (25, 26) étant avantageusement plus grand que celui de ces premières roues (20, 21).

9. Dispositif de groupement selon l'une des revendications 1 à 8, caractérisé en ce que, pour séparer, d'un courant de récipients (6) formant plusieurs files de groupes (5) de ces récipients, le transporteur est formé d'un certain nombre d'éléments de transport (10) parallèles, et chaque élément de groupement (15, 15) comporte, pour chacun de ces éléments de transport (10), au moins un doigt (17, 66) de groupement, mais avantageusement deux doigts (17, 66).
chaque élément de groupement (15, 15a) étant formé d'un élément (16, 60) en forme de barreau, dont l'axe horizontal est perpendiculaire au sens (A) de l'avance des éléments de transport (10), qui porte les doigts de groupement (17, 66), est articulé, sur son axe d'articulation (30, 60'), sur au moins un unique élément d'entraînement (18, 67) et est solidaire de la bielle (32, 98) qui est en prise avec l'élément de réglage (24, 79),
cet élément d'entraînement étant avantageusement double et l'élément (16) en forme de barreau de chaque élément de groupement (15) étant articulé de chaque côté sur l'élément d'entraînement (18, 67) respectif, l'élément de réglage (29, 79) étant par contre avantageusement unique et l'élément (16, 68) en forme de barreau de chaque élément de groupement (15, 15a) comportant une bielle (32, 98).

10. Dispositif de groupement selon l'une des revendications 1 à 9, caractérisé en ce que la bielle (32, 98) associée à chaque élément (15 15a) ou doigt (17, 66) de groupement est en prise avec l'élément de réglage (24, 79) en un point d'attaque et d'articulation réglable sur la longueur de cette bielle (32, 98), ce point d'attaque étant avantageusement formé par un mécanisme d'entraînement et de guidage à bouton coulissant dans une boutonnière (33, 34 ; 99, 100).

11. Dispositif de groupement selon l'une des revendications 1 à 10, caractérisé en ce que les éléments de groupement (15a) comportent des éléments de guidage (61, 64) coopérant avec des guides fixes (62, 65), qui servent aussi, avantageusement et au moins partiellement, à guider les éléments de transport (10) qui forment le transporteur.
